# EUROPEAN PATENT APPLICATION

(11) **EP 3 546 712 A1**
(43) Date of publication of application: **02.10.2019**
(21) Application number: 17873227.7
(22) Date of filing: 24.11.2017
(51) Int. Cl.: F01N 3/20, B01D 53/94, F01N 3/08

(54) **EXHAUST GAS PURIFYING DEVICE ABNORMALITY DIAGNOSING SYSTEM**

(30) Priority: 24.11.2016 JP 2016228283
(71) Applicant: TOYOTA JIDOSHA KABUSHIKI KAISHA, Toyota-shi, Aichi-ken 471-8571 (JP)
(72) Inventor: SHIRASAWA, Takeru, Aichi 471-8571 (JP); KIDOKORO, Toru, Aichi 471-8571 (JP); OGISO, Makoto, Aichi 471-8571 (JP); FURUI, Kenji, Aichi 471-8571 (JP); HIROOKA, Kenta, Aichi 471-8571 (JP)
(74) Representative: D Young & Co LLP
(86) International application number: PCT/JP2017/042221
(87) International publication number: WO 2018/097246

(57) **Abstract**

An abnormality diagnosis system for an exhaust gas purification device performs abnormality diagnosis of an SCR catalyst on the basis of the concentration of ammonia in exhaust gas in the region downstream of the SCR catalyst. The system includes a first estimation unit configured to estimate the amount of ammonia adsorbed in the SCR catalyst in an abnormal condition (ammonia adsorption amount in abnormal condition) and a second estimation unit configured to estimate the amount of ammonia adsorbed in the SCR catalyst in a normal condition (ammonia adsorption amount in normal condition). When performing abnormality diagnosis of the SCR catalyst, the system supplies reducing agent so as to make the ammonia adsorption amount in abnormal condition larger than a first predetermined adsorption amount equal to or larger than a slip start adsorption amount in abnormal condition and to make the ammonia adsorption amount in normal condition smaller than a second predetermined adsorption amount equal to or smaller than a slip start adsorption amount in normal condition.

## Description

### Technical Field

The present invention relates to an abnormality diagnosis system for an exhaust gas purification apparatus.

### Background Art

A known exhaust gas purification apparatus includes a selective catalytic reduction NOx catalyst (also referred to as "SCR catalyst" hereinafter) capable of reducing NOx contained in the exhaust gas of an internal combustion engine by using ammonia as a reducing agent and a reducing agent supply device that supplies ammonia or a precursor of ammonia as a reducing agent to the exhaust gas.

It is known to diagnose abnormality of the SCR catalyst in such an exhaust gas purification apparatus on the basis of the NOx concentration in the region upstream of the SCR catalyst and the NOx concentration in the region downstream of the SCR catalyst, in other words, on the basis of the NOx removal rate of the SCR catalyst.

Patent Literature 1 discloses abnormality diagnosis of an SCR catalyst based on the ammonia concentration in the region downstream of the SCR catalyst. In the technology disclosed in Patent Literature 1, reducing agent is supplied to the exhaust gas at a location upstream of the SCR catalyst to reduce NOx. Diagnosis as to abnormality of the SCR catalyst is made based on the concentration of ammonia slipping out of the SCR catalyst.

### Citation List

### Patent Literature

Patent Literature 1: Publication of PCT International Application WO2006/046339
Patent Literature 2: Japanese Patent Application Laid-Open No. 2015-086714
Patent Literature 3: Publication of U.S. Patent Application No. 2013/0000278
Patent Literature 4: Japanese Patent Application Laid-Open No. 2013-227930

### Summary of Invention

### Technical Problem

According to the aforementioned prior art, the abnormality diagnosis of the SCR catalyst is performed based on the fact that ammonia tends to slip out of the SCR catalyst when the SCR catalyst has some abnormality. However, the amount of ammonia adsorbed in the SCR catalyst at the time when the condition for performing the abnormality diagnosis is met can be small depending on the structure of the exhaust gas purification apparatus or the operation state of the internal combustion engine. Then, if the quantity of reducing agent supplied is small, there may be cases where ammonia does not slip out of the SCR catalyst even if the SCR catalyst has an abnormality.

Therefore, in order for abnormality diagnosis of the SCR catalyst to be carried out successfully on the basis of the ammonia concentration in the exhaust gas in the region downstream of the SCR catalyst, it is necessary that a proper amount of ammonia be adsorbed in the SCR catalyst. However, the amount of ammonia adsorbed in the SCR catalyst may not be proper for abnormality diagnosis of the SCR catalyst at the time when the abnormality diagnosis is required to be performed in some cases. In such cases, it may be difficult to perform the abnormality diagnosis at an adequate frequency.

The present invention has been made in view of the above problem, and an object of the present invention is to enable abnormality diagnosis of the SCR catalyst to be performed at an adequate frequency.

### Solution to Problem

According to a first aspect of the present invention, there is provided an abnormality diagnosis system for an exhaust gas purification apparatus that is applied to an exhaust gas purification apparatus including a reducing agent supply device provided in an exhaust passage of an internal combustion engine to supply ammonia or a precursor of ammonia as a reducing agent into the exhaust passage, a selective catalytic reduction NOx catalyst provided in the exhaust passage downstream of said reducing agent supply device to reduce NOx in exhaust gas by ammonia, and measuring means configured to measure the ammonia concentration in the exhaust gas downstream of said selective catalytic reduction NOx catalyst and performs abnormality diagnosis of said selective catalytic reduction NOx catalyst on the basis of the ammonia concentration measured by said measuring means. The abnormality diagnosis system includes: estimation means configured to estimate an ammonia adsorption amount defined as the amount of ammonia adsorbed in said selective catalytic reduction NOx catalyst on the assumption that said selective catalytic reduction NOx catalyst is normal; supply control means configured to perform supply control to supply, by said reducing agent supply device, said reducing agent in a predetermined fixed supply quantity for diagnosis larger than the quantity of reducing agent that is supplied by said reducing agent supply device for the purpose of reduction of NOx by said selective catalytic reduction NOx catalyst, when said abnormality diagnosis is performed; abnormality diagnosis means configured to perform abnormality diagnosis of said selective catalytic reduction NOx catalyst on the basis of the ammonia concentration measured by said measuring means when said reducing agent is supplied by said supply control; and reducing control means configured to perform reducing control to reduce the amount of ammonia adsorbed in said selective catalytic reduction NOx catalyst in such a way as to make said ammonia adsorption amount after the completion of said supply control performed next time larger than a slip start adsorption amount in abnormal condition defined as the amount of ammonia adsorbed in said selective catalytic reduction NOx catalyst at which slip of ammonia out of said selective catalytic reduction NOx catalyst starts if said selective catalytic reduction NOx catalyst is in a condition in which said selective catalytic reduction NOx catalyst is diagnosed to have an abnormality by said abnormality diagnosis and smaller than a slip start adsorption amount in normal condition defined as the amount of ammonia adsorbed in said selective catalytic reduction NOx catalyst at which slip of ammonia out of said selective catalytic reduction NOx catalyst starts if said selective catalytic reduction NOx catalyst is in a normal condition, at a specific time after the completion of said abnormality diagnosis performed last time and before the start of said abnormality diagnosis performed next time, if said ammonia adsorption amount is larger than a specific upper limit adsorption amount at said specific time.

The above-described abnormality diagnosis system performs the supply control to supply the supply quantity for diagnosis of reducing agent by the reducing agent supply device when performing the abnormality diagnosis. According to the first aspect of the present invention, the supply quantity for diagnosis is a predetermined fixed quantity larger than the quantity of reducing agent that is supplied by the reducing agent supply device for the purpose of reduction of NOx by the selective catalytic reduction NOx catalyst (which will also be referred to as the "SCR catalyst" hereinafter). The quantity of reducing agent that is supplied by the reducing agent supply device for the purpose of reduction of NOx by the selective catalytic reduction NOx catalyst will also be referred to as the "quantity required for reduction" hereinafter. The quantity required for reduction is the quantity of reducing agent that is supplied for the purpose of reducing NOx during normal operation of the internal combustion engine. The supply quantity for diagnosis is a predetermined quantity.

If the above-described supply control is performed when the SCR catalyst is normal, the amount of ammonia adsorbed in the SCR catalyst tends to be relatively large because the reducing agent is supplied in the supply quantity for diagnosis larger than the quantity required for reduction. If the ammonia adsorption amount after the completion of this control (which will also be referred to as the "adsorption amount after supply control" hereinafter) is larger than the slip start adsorption amount in abnormal condition and smaller than the slip start adsorption amount in normal condition, ammonia will not slip out of the SCR catalyst if the SCR catalyst is normal, and ammonia will slip out of the SCR catalyst if the SCR catalyst has an abnormality. The ammonia adsorption amount is the estimated value of the amount of ammonia adsorbed in the SCR catalyst that is estimated on the assumption that the SCR catalyst is normal. When ammonia slips out of the SCR catalyst, the ammonia concentration is measured by the measuring means. Thus, abnormality diagnosis of the SCR catalyst can be performed on the basis of the ammonia concentration measured by the measuring means when the reducing agent is supplied by the supply control. When performing the abnormality diagnosis of the SCR catalyst in this way, the abnormality diagnosis means may determine whether or not the SCR catalyst has an abnormality by a known technique. For example, the SCR catalyst may be diagnosed to have an abnormality when the ammonia concentration measured by the measuring means reaches or exceeds a threshold concentration.

In the above-described abnormality diagnosis system, since the adsorption amount after supply control tends to be relatively large, the ammonia adsorption amount at the time when abnormality diagnosis is performed next time tends to be larger than the specific upper limit amount, if the rate of decrease of the ammonia adsorption amount from the adsorption amount after supply control after the completion of the supply control is relatively low. The specific upper limit adsorption amount mentioned above is an upper limit of the ammonia adsorption amount at which the abnormality diagnosis of the SCR catalyst is allowed to be performed. For instance, the specific upper limit adsorption amount is defined as such an ammonia adsorption amount that if the reducing agent is supplied in the supply quantity for diagnosis larger than the quantity required for reduction in the process of abnormality diagnosis in the state in which the ammonia adsorption amount is larger than the specific upper limit adsorption amount, the adsorption capacity of the SCR catalyst is exceeded even if the SCR catalyst is normal and slip of ammonia out of the SCR catalyst can result. Therefore, if the reducing agent is supplied in the supply quantity for diagnosis larger than the quantity required for reduction in the process of the next abnormality diagnosis in a circumstance in which the ammonia adsorption amount at that time is larger than the specific upper limit adsorption amount, ammonia that the SCR catalyst even in a normal condition cannot adsorb can slip out of it. To avoid this, the above-described abnormality diagnosis system performs the reducing control at a specific time before the time when the abnormality diagnosis is performed next time, if the ammonia adsorption amount is larger than the specific upper limit adsorption amount.

After the reducing control is started at the aforementioned specific time, the amount of ammonia adsorbed in the SCR catalyst is reduced. The reducing control reduces the amount of ammonia adsorbed in the SCR catalyst taking account of the predetermined supply quantity for diagnosis in such a way as to make the ammonia adsorption amount after the completion of the next supply control larger than the slip start adsorption amount in abnormal condition and smaller than the slip start adsorption amount in normal condition. Even when the SCR catalyst is in normal conditions, the ammonia adsorption capacity of the SCR catalyst changes depending on the degree of deterioration of the SCR catalyst. The slip start adsorption amount in normal condition may be defined as the amount of ammonia adsorbed in the SCR catalyst at which slip of ammonia out of the SCR catalyst starts in the case where the SCR catalyst is in a specific deteriorated condition in which the SCR catalyst is regarded to be normal.

As the reducing agent is supplied in the quantity for diagnosis larger than the quantity required for reduction in the process of the next abnormality diagnosis, the ammonia adsorption amount, which is the amount of ammonia adsorbed in the SCR catalyst that is estimated on the assumption that the SCR catalyst is normal, changes to an amount larger than the slip start amount in abnormal condition and smaller than the slip start adsorption amount in normal condition. This resultant adsorption amount will also be referred to as "specific state adsorption amount" hereinafter. Then, if the SCR catalyst is normal, ammonia will not slip. When the supply control is performed in the process of the next abnormality diagnosis, ammonia does not slip if the SCR catalyst is normal but slips if the SCR catalyst has an abnormality. Thus, the aforementioned abnormality diagnosis means can make a diagnosis as to abnormality of the SCR catalyst according to the predetermined timing of performing the abnormality diagnosis.

If the ammonia adsorption amount is equal to or smaller than the specific upper limit adsorption amount at said specific time, the ammonia adsorption amount at the time when the next abnormality diagnosis is performed will be equal to or smaller than the specific upper limit adsorption amount. In that case, the reducing control is not performed at said specific time. When the SCR catalyst is normal, as the reducing agent is supplied in the supply quantity for diagnosis larger than the quantity required for reduction, a relatively large quantity of ammonia that would lead to slip of ammonia out of the SCR catalyst if the SCR catalyst were abnormal is adsorbed by the SCR catalyst in a normal condition. Hence, even though the ammonia adsorption amount is equal to or smaller than the specific upper limit adsorption amount, the ammonia adsorption amount tends to be relatively large at said specific time, though not larger than the specific upper limit adsorption amount.

By performing the above-described reducing control, the abnormality diagnosis system for an exhaust gas purification apparatus according to the first aspect of the present invention enables the abnormality diagnosis of the SCR catalyst based on the ammonia concentration in the region downstream of the SCR catalyst to be performed at an adequate frequency.

According to a second aspect of the present invention, there is provided an abnormality diagnosis system for an exhaust gas purification apparatus including: estimation means configured to estimate an ammonia adsorption amount defined as the amount of ammonia adsorbed in said selective catalytic reduction NOx catalyst on the assumption that said selective catalytic reduction NOx catalyst is normal; supply control means configured to perform supply control to supply, by said reducing agent supply device, said reducing agent in a supply quantity for diagnosis larger than the quantity of reducing agent that is supplied by said reducing agent supply device for the purpose of reduction of NOx by said selective catalytic reduction NOx catalyst, when said abnormality diagnosis is performed, said supply control means performing said supply control in such a way as to make said ammonia adsorption amount after the completion of said supply control larger than a slip start adsorption amount in abnormal condition defined as the amount of ammonia adsorbed in said selective catalytic reduction NOx catalyst at which slip of ammonia out of said selective catalytic reduction NOx catalyst starts if said selective catalytic reduction NOx catalyst is in a condition in which said selective catalytic reduction NOx catalyst is diagnosed to have an abnormality by said abnormality diagnosis and smaller than a slip start adsorption amount in normal condition defined as the amount of ammonia adsorbed in said selective catalytic reduction NOx catalyst at which slip of ammonia out of said selective catalytic reduction NOx catalyst starts if said selective catalytic reduction NOx catalyst is in a normal condition; abnormality diagnosis means configured to perform abnormality diagnosis of said selective catalytic reduction NOx catalyst on the basis of the ammonia concentration measured by said measuring means when said reducing agent is supplied by said supply control; and reducing control means configured to perform reducing control to reduce the amount of ammonia adsorbed in said selective catalytic reduction NOx catalyst in such a way as to make said ammonia adsorption amount equal to or smaller than a specific upper limit adsorption amount, at a specific time after the completion of said abnormality diagnosis performed last time and before the start of said abnormality diagnosis performed next time, if said ammonia adsorption amount is larger than said specific upper limit adsorption amount at said specific time.

In the abnormality diagnosis system according to the second aspect of the present invention, the supply control means performs the supply control in such a way as to make the adsorption amount after supply control equal to the specific state adsorption amount. In other words, in the abnormality diagnosis system according to the second aspect of the present invention, the supply quantity for diagnosis may be a specific variable quantity larger than the quantity required for reduction. If the ammonia adsorption amount at said specific time is larger than the specific upper limit adsorption amount, the reducing control is performed at that time. This makes the ammonia adsorption amount equal or smaller than the specific upper limit adsorption amount. As described above, the specific upper limit adsorption amount is an upper limit of the ammonia adsorption amount at which the abnormality diagnosis of the SCR catalyst is allowed to be performed. If, for example, the quantity of ammonia is reduced by a fixed quantity by the reducing control, the ammonia adsorption amount after performing the reducing control varies in accordance with the ammonia adsorption amount before performing the reducing control. In this case, performing the reducing control and the above-descried supply control helps to adjust the ammonia adsorption amount after the completion of the supply control to the specific state adsorption amount.

If the reducing control is not performed although the ammonia adsorption amount is larger than the specific upper limit adsorption amount and the ammonia adsorption amount before performing the supply control is relatively large, it is sometime impossible to adjust the adsorption amount after supply control to the specific state adsorption amount only by the supply control. This is because the supply quantity for diagnosis is larger than the quantity required for reduction, and the minimum value of the supply quantity for diagnosis tends to be relatively large. If it is not possible to adjust the adsorption amount after supply control to the specific state adsorption amount only by the supply control, the next abnormality diagnosis cannot be performed. Therefore, if the ammonia adsorption amount is larger than the specific upper limit adsorption amount at said specific time, it is necessary to perform the reducing control to reduce the ammonia adsorption amount to an amount smaller than the specific upper limit adsorption amount so that the ammonia adsorption amount before performing the supply control will be prevented from being so large. This enables the abnormality diagnosis of the SCR catalyst to be performed at the predetermined timing of performing the abnormality diagnosis.

As described above, even if the ammonia adsorption amount is equal to or smaller than the specific upper limit adsorption amount at said specific time (in this case, the reducing control is not performed), the ammonia adsorption amount tends to be relatively large, though not larger than the specific upper limit adsorption amount. However, there can be cases where the ammonia adsorption amount is very small, depending on the operation state of the internal combustion engine or other factors. If the ammonia adsorption amount is very small at the time when the next abnormality diagnosis is performed (whether the reducing control is performed or not), a relatively large quantity of reducing agent may be supplied by the supply control so as to adjust the adsorption amount after supply control to the specific state adsorption amount. Thus, it is possible to adjust the adsorption amount after supply control to the specific state adsorption amount appropriately.

In the abnormality diagnosis system for an exhaust gas purification apparatus according to the second aspect of the present invention, by performing the above-described supply control and reducing control, it is possible to appropriately adjust the adsorption amount after supply to the specific state adsorption amount with the supply quantity for diagnosis larger than the quantity required for reduction. Moreover, performing the above-described reducing control enables the abnormality diagnosis of the SCR catalyst based on the ammonia concentration in the region downstream of the SCR catalyst to be performed at an adequate frequency.

The abnormality diagnosis system for an exhaust gas purification apparatus according to the second aspect of the present invention may further include determination means configured to determine, when a condition for performing said abnormality diagnosis is met, said supply quantity for diagnosis on the basis of said ammonia adsorption amount at the time when said condition for performing said abnormality diagnosis is met in such a way that the sum of said ammonia adsorption amount at the time when said condition for performing said abnormality diagnosis is met and the quantity of ammonia derived from said supply quantity for diagnosis is larger than said slip start adsorption amount in abnormal condition and smaller than said slip start adsorption amount in normal condition. Said supply control means of said abnormality diagnosis system may supply said reducing agent in said supply quantity for diagnosis determined by said determination means by said reducing agent supply device in said supply control. The supply quantity for diagnosis determined by said determination means is larger than the quantity required for reduction.

As described above, the reducing control is performed at a specific time after the abnormality diagnosis is performed last time and before the abnormality diagnosis is performed next time. Hence, the ammonia adsorption amount may change from the time when the reducing control is performed to the time when the reducing control is performed next time. If the supply quantity for diagnosis is determined at the time when the condition for performing the abnormality diagnosis is met on the basis of the ammonia adsorption amount at the time when the condition for performing the abnormality diagnosis is met as in the above-described abnormality diagnosis system, the supply control can be performed with higher accuracy than in the case where, for example, the supply quantity for diagnosis is determined on the basis of the ammonia adsorption amount immediately after the completion of the reducing control.

Said determination means may determine said supply quantity for diagnosis in such a way that the sum of said ammonia adsorption amount at the time when said condition for performing said abnormality diagnosis is met and the quantity of ammonia derived from said supply quantity for diagnosis is equal to or larger than an abnormality diagnosis enabling quantity defined as the sum of said slip start adsorption amount in abnormal condition and a specific measurable ammonia quantity and smaller than said slip start adsorption amount in normal condition.

The specific measurable ammonia quantity is determined taking account of measurement errors in measurement of the ammonia concentration by the measuring means etc. If the quantity of ammonia slipping out of the SCR catalyst smaller than the specific measurable ammonia quantity, it is sometimes difficult to measure the concentration of ammonia slipping out of the SCR catalyst, because the measurement can be affected by measurement errors etc. Moreover, for example, when an NOx sensor capable of measuring the concentration of NOx in the exhaust gas and having sensitivity to ammonia as well as NOx is used as the measuring means, it is sometimes difficult to measure the ammonia concentration accurately unless the ammonia concentration in the exhaust gas is relatively higher than the NOx concentration. The specific measurable ammonia quantity is determined taking account of this.

When the supply control is performed to supply the reducing agent in the supply quantity for diagnosis determined as above by the reducing agent supply device, the adsorption amount after supply control is made equal to or larger than the abnormality diagnosis enabling quantity and smaller than the slip start adsorption amount in normal condition. Then, if the SCR catalyst has an abnormality, a quantity of ammonia larger than the specific measurable ammonia quantity will slip out of the SCR catalyst when the supply control is performed. Then, the measuring means can measure the concentration of ammonia with relatively high accuracy. Therefore, the abnormality diagnosis means can make a diagnosis of the SCR catalyst with relatively high accuracy.

By performing the supply control to supply the reducing agent in the supply quantity for diagnosis as described above, the above-described abnormality diagnosis system enables the abnormality diagnosis of the SCR catalyst based on the ammonia concentration in the region downstream of the SCR catalyst to be performed with as high accuracy as possible. Executing the above-described reducing control enables the abnormality diagnosis with such high accuracy to be performed at an adequate frequency.

According to the present invention, the exhaust gas purification apparatus may further include an NOx removing catalyst provided in the exhaust passage upstream of said selective catalytic reduction NOx catalyst to reduce NOx in the exhaust gas. In the exhaust gas purification apparatus configured as above, a somewhat large part of NOx discharged from the internal combustion engine is removed by the NOx removing catalyst provided in the exhaust passage upstream of the SCR catalyst, and the NOx concentration in the exhaust gas flowing into the SCR catalyst is relatively low. In consequence, the quantity of ammonia available for reduction of NOx is relatively low. Hence, after the supply control is performed once, the rate of decrease of the ammonia adsorption amount from the adsorption amount after supply control tends to be low. In that case, as described above, the ammonia adsorption amount at the time when abnormality diagnosis is performed next time tends to be larger than the specific upper limit adsorption amount. In this state, if the reducing agent is supplied when the abnormality diagnosis is performed next time, ammonia that the SCR catalyst cannot adsorb may slip even if the SCR catalyst is normal.

Therefore, the abnormality diagnosis system for an exhaust gas purification apparatus according to the present invention is configured to perform the reducing control at the specific time if the ammonia adsorption amount at that time is larger than the specific upper limit adsorption amount, thereby enabling the abnormality diagnosis of the SCR catalyst to be performed at an adequate frequency.

The reducing control means of the abnormality diagnosis system for an exhaust gas purification apparatus according to the present invention may perform, as said reducing control, at least one of catalyst temperature raising control for raising the temperature of said selective catalytic reduction NOx catalyst and NOx flow rate increasing control for increasing the flow rate of NOx flowing into said selective catalytic reduction NOx catalyst.

The amount of ammonia that the SCR catalyst can adsorb changes depending on the temperature of the SCR catalyst, and raising the temperature of the SCR catalyst can reduce the amount of ammonia adsorbed in the SCR catalyst. Increasing the flow rate of NOx flowing into the SCR catalyst can also reduce the amount of ammonia adsorbed in the SCR catalyst, because a relatively large quantity of ammonia is consumed in reduction of the increased quantity of NOx.

According to a third aspect of the present invention, there is provided an abnormality diagnosis system for an exhaust gas purification apparatus that is applied to an exhaust gas purification apparatus including a reducing agent supply device provided in an exhaust passage of an internal combustion engine to supply ammonia or a precursor of ammonia as a reducing agent into the exhaust passage, a selective catalytic reduction NOx catalyst provided in the exhaust passage downstream of the reducing agent supply device to reduce NOx in exhaust gas by ammonia, and a measuring unit configured to measure the ammonia concentration in the exhaust gas downstream of the selective catalytic reduction NOx catalyst and performs abnormality diagnosis of the selective catalytic reduction NOx catalyst on the basis of the ammonia concentration measured by the measuring unit. The abnormality diagnosis system according to the third aspect of the present invention comprises: a first estimation unit configured to estimate an ammonia adsorption amount in abnormal condition defined as the amount of ammonia adsorbed in the selective catalytic reduction NOx catalyst on the assumption that the selective catalytic reduction NOx catalyst is in a condition that is diagnosed as abnormal by the abnormality diagnosis; a second estimation unit configured to estimate an ammonia adsorption amount in normal condition defined as the amount of ammonia adsorbed in the selective catalytic reduction NOx catalyst on the assumption that the selective catalytic reduction NOx catalyst is in a normal condition; a supply control unit configured to perform, when the abnormality diagnosis is to be performed, supply control for diagnosis to supply the reducing agent by the reducing agent supply device in such a way as to make the ammonia adsorption amount in abnormal condition estimated by the first estimation unit larger than a first predetermined adsorption amount that is equal to or larger than a slip start adsorption amount in abnormal condition and to make the ammonia adsorption amount in normal condition estimated by the second estimation unit smaller than a second predetermined adsorption amount that is equal to or smaller than a slip start adsorption amount in normal condition, the slip start adsorption amount in abnormal condition being defined as the amount of ammonia adsorbed in the selective catalytic reduction NOx catalyst at which slip of ammonia out of the selective catalytic reduction NOx catalyst starts if the selective catalytic reduction NOx catalyst is in a condition that is diagnosed as abnormal by the abnormality diagnosis, and the slip start adsorption amount in normal condition being defined as the amount of ammonia adsorbed in the selective catalytic reduction NOx catalyst at which slip of ammonia out of the selective catalytic reduction NOx catalyst starts if the selective catalytic reduction NOx catalyst is in a normal condition; and an abnormality diagnosis unit configured to perform abnormality diagnosis of the selective catalytic reduction NOx catalyst on the basis of the ammonia concentration measured by the measuring unit while the supply control for diagnosis is performed by the supply control unit.

The abnormality diagnosis system according to the third aspect of the present invention estimates the ammonia adsorption amount in abnormal condition by the first estimation unit and the ammonia adsorption amount in normal condition by the second estimation unit. The ammonia adsorption amount in abnormal condition is the amount of ammonia adsorbed in the selective catalytic reduction NOx catalyst (SCR catalyst) on the assumption that the SCR catalyst is in a condition that is diagnosed as abnormal by the abnormality diagnosis. That is, the ammonia adsorption amount in abnormal condition is the amount of ammonia adsorbed in the SCR catalyst that is estimated on the assumption that the SCR catalyst is in a condition that is diagnosed as abnormal. The ammonia adsorption amount in normal condition is the amount of ammonia adsorbed in the SCR catalyst on the assumption that the SCR catalyst is in a normal condition. That is, the ammonia adsorption amount in abnormal condition is the amount of ammonia adsorbed in the SCR catalyst that is estimated on the assumption that the SCR catalyst is in a condition that is diagnosed as normal. When the abnormality diagnosis is to be performed, the supply control unit performs the supply control for diagnosis so as to make the ammonia adsorption amount in abnormal condition estimated by the first estimation unit larger than the first predetermined adsorption amount that is equal to or larger than the slip start adsorption amount in abnormal condition and to make the ammonia adsorption amount in normal condition estimated by the second estimation unit smaller than the second predetermined adsorption amount that is equal to or smaller than the slip start adsorption amount in normal condition.

When the supply control for diagnosis is performed as above, ammonia does not slip out of the SCR catalyst if the SCR catalyst is in a normal condition but slips out of the SCR catalyst if the SCR catalyst has an abnormality. Therefore, the abnormality diagnosis unit is configured to perform abnormality diagnosis on the basis of the ammonia concentration measured by the measuring unit while the supply control for diagnosis is performed by the supply control unit.

According to the third aspect of the present invention, it is possible to adjust the amount of ammonia adsorbed in the SCR catalyst to an amount suitable for abnormality diagnosis of the SCR catalyst based on the concentration of ammonia slipping out of the SCR catalyst by performing the supply control for diagnosis by the supply control unit. This enables abnormality diagnosis of an SCR catalyst to be performed at an adequate frequency.

### Advantageous Effects of Invention

The present invention enables abnormality diagnosis of an SCR catalyst to be performed at an adequate frequency. Brief Description of Drawings

Fig. 1 is a diagram showing the general configuration of an internal combustion engine according to an embodiment of the present invention and its air-intake and exhaust systems.
Fig. 2 is a graph showing the NOx concentration of the exhaust gas discharged from the internal combustion engine before flowing into an NSR catalyst, the NOx concentration in the exhaust gas after passing through the NSR catalyst and before flowing into an SCR catalyst, and the NOx concentration in the exhaust gas after passing through the SCR catalyst.
Fig. 3A is a first graph showing relationship between the quantity of ammonia supplied to the SCR catalyst and the concentration of ammonia slipping out of the SCR catalyst in a case where the SCR catalyst is normal and in a case where the SCR catalyst is abnormal in comparison.
Fig. 3B is a second graph showing relationship between the quantity of ammonia supplied to the SCR catalyst and the concentration of ammonia slipping out of the SCR catalyst in a case where the SCR catalyst is normal and in a case where the SCR catalyst is abnormal in comparison.
Fig. 4A shows change with time of the quantity of urea solution supplied through a urea solution addition valve per unit time, the ammonia adsorption amount, the SCR catalyst temperature, and the flow rate of inflowing NOx when urea solution is supplied in the process of abnormality diagnosis.
Fig. 4B is a first graph showing the relationship between the amount of ammonia adsorbed in the SCR catalyst and the SCR catalyst temperature, where the amount of ammonia adsorbed in the SCR catalyst in a normal condition before the supply of urea solution in the abnormality diagnosis and the amount of ammonia adsorbed in the SCR catalyst after the supply of urea solution are shown.
Fig. 5 is a first graph showing change with time of the quantity of urea solution supplied by the urea solution addition valve per unit time, the ammonia adsorption amount, the SCR catalyst temperature, and the inflowing NOx flow rate when the supply control and the reducing control are performed.
Fig. 6 is a flow chart of a control flow executed in an abnormality diagnosis system for an exhaust gas purification apparatus according to a first embodiment, which is an embodiment of the first aspect of the present invention.
Fig. 7A is a second graph showing change with time of the quantity of urea solution supplied by the urea solution addition valve per unit time, the ammonia adsorption amount, the SCR catalyst temperature, and the inflowing NOx flow rate when the supply control and the catalyst temperature raising control are performed.
Fig. 7B is a second graph showing the relationship between the amount of ammonia adsorbed in the SCR catalyst and the SCR catalyst temperature, where the amount of ammonia adsorbed in the SCR catalyst in a normal condition before the supply of urea solution in the abnormality diagnosis and the amount of ammonia adsorbed in the SCR catalyst after the supply of urea solution are shown.
Fig. 8 is a flow chart of a control flow executed in an abnormality diagnosis system for an exhaust gas purification apparatus according to a second embodiment, which is an embodiment of the second aspect of the present invention.
Fig. 9 is a third graph showing the relationship between the amount of ammonia adsorbed in the SCR catalyst and the SCR catalyst temperature, where the amount of ammonia adsorbed in the SCR catalyst in a normal condition before the supply of urea solution in the abnormality diagnosis and the amount of ammonia adsorbed in the SCR catalyst after the supply of urea solution are shown.
Fig. 10 is a graph showing change with time of the quantity of urea solution supplied by the urea solution addition valve per unit time, the ammonia adsorption amount, the SCR catalyst temperature, the inflowing NOx flow rate, and the counter when the supply control and the NOx flow rate increasing control are performed.
Fig. 11 is a block diagram illustrating functions of an adsorption amount calculation unit in the ECU.
Fig. 12 is a graph illustrating relationship of the slip start adsorption amount in abnormal condition Qada and the first predetermined adsorption amount Qada1 with the temperature of the SCR catalyst.
Fig. 13 is a graph illustrating relationship of the slip start adsorption amount in normal condition Qadn and the second predetermined adsorption amount Qadn2 with the temperature of the SCR catalyst.
Fig. 14 is a flow chart of a control process executed by the ECU for the purpose of abnormality diagnosis of he SCR catalyst in a third embodiment, which is an embodiment of the third aspect of the present invention.

### Description of Embodiments

In the following, modes for carrying out the present invention will be specifically described as embodiments for illustrative purposes with reference to the drawings. It should be understood that the dimensions, materials, shapes, relative arrangements, and other features of the components that will be described in connection with the embodiments are not intended to limit the technical scope of the present invention only to them, unless stated otherwise.

### First Embodiment

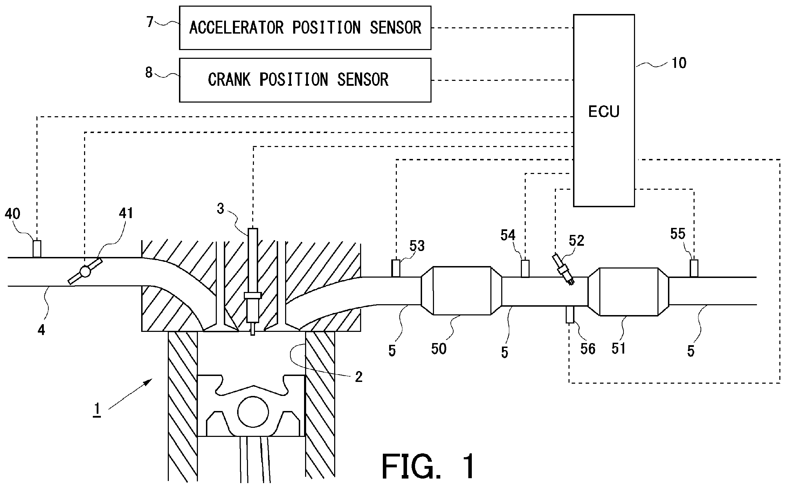

In the following, an embodiment of the present invention will be described with reference to the drawings. Fig. 1 is a diagram showing the general configuration of the air-intake and exhaust systems of an internal combustion engine according to an embodiment. The internal combustion engine 1 shown in Fig. 1 is a compression-ignition internal combustion engine (diesel engine). The present invention can also be applied to a spark-ignition, lean-burn internal combustion engine that uses gasoline or other fuels.

The internal combustion engine 1 has a fuel injection valve 3 that injects fuel into a cylinder 2. If the internal combustion engine 1 is a spark-ignition internal combustion engine, the fuel injection valve 3 may be adapted to inject fuel into an intake port.

The internal combustion engine 1 is connected with an intake passage 4. The intake passage 4 is provided with an air flow meter 40 and a throttle valve 41. The air flow meter 40 outputs an electrical signal representing the quantity (or mass) of intake air flowing in the intake passage 4. The throttle valve 41 is arranged in the intake passage 4 downstream of the air flow meter 40. The throttle valve 41 can vary the channel cross sectional area in the intake passage 4 to adjust the intake air quantity of the internal combustion engine 1.

The internal combustion engine 1 is connected with an exhaust passage 5. The exhaust passage 5 is provided with a first NOx sensor 53, an NOx storage reduction catalyst 50 (which will be also referred to as the "NSR catalyst 50" hereinafter), a second NOx sensor 54, a urea solution addition valve 52, a temperature sensor 56, a selective catalytic reduction NOx catalyst 51 (which will be also referred to as the "SCR catalyst 51" hereinafter), and a third NOx sensor 55, which are arranged in order along the direction of exhaust gas flow in the exhaust passage 5. The NSR catalyst 50 chemically stores or physically adsorbs NOx in the exhaust gas when the air-fuel ratio of the exhaust gas is a lean air-fuel ratio higher than the stoichiometric air-fuel ratio, and releases NOx and promotes the reaction of the released NOx and reductive components in the exhaust gas, such as hydrocarbon (HC) and/or carbon monoxide (CO) in the exhaust gas when the air-fuel ratio of the exhaust gas is a rich air-fuel ratio lower than the stoichiometric air-fuel ratio. The SCR catalyst 51 has the function of reducing NOx in the exhaust gas using ammonia as a reducing agent. The urea solution addition valve 52 arranged upstream of the SCR catalyst supplies aqueous urea solution to the exhaust gas flowing in the exhaust passage 5, so that the urea solution is supplied to the SCR catalyst 51. Thus, urea as a precursor of ammonia is supplied to the SCR catalyst 51. The urea thus supplied is hydrolyzed to produce ammonia, and the ammonia thus produced is adsorbed by the SCR catalyst 51. The ammonia adsorbed by the SCR catalyst 51 serves as a reducing agent to reduce NOx in the exhaust gas. The urea solution addition valve 52 may be replaced by an ammonia addition valve that adds ammonia gas to the exhaust gas. In this embodiment, the urea solution addition valve 52 or the ammonia addition valve serves as the reducing agent supply device according to the present invention. The exhaust passage 5 may be provided with a filter that traps PM in the exhaust gas.

The first NOx sensor 53, the second NOx sensor 54, and the third NOx sensor 55 each output an electrical signal representing the NOx concentration in the exhaust gas. The temperature sensor 56 outputs an electrical signal representing the temperature of the exhaust gas. The NOx sensor is a sensor that measures the NOx concentration in the exhaust gas, and the NOx sensor detects ammonia also as NOx. The third NOx sensor 55 as such outputs an electrical signal representing the combined concentration of NOx and ammonia in the exhaust gas in the region downstream of the SCR catalyst 51. In this embodiment, the third NOx sensor 55 serves as the measuring means according to the present invention.

An electronic control unit (ECU) 10 is provided for the internal combustion engine 1. The ECU 10 controls the operation state of the internal combustion engine 1. The ECU 10 is electrically connected with various sensors such as an accelerator position sensor 7 and a crank position sensor 8 as well as the aforementioned air flow meter 40, the first NOx sensor 53, the second NOx sensor 54, the third NOx sensor 55, and the temperature sensor 56. The accelerator position sensor 7 outputs an electrical signal representing the amount of operation of the accelerator pedal that is not shown in the drawings (or the accelerator opening degree). The crank position sensor 8 outputs an electrical signal representing the rotational position of the engine output shaft (or the crankshaft) of the internal combustion engine 1. The output signals of these sensors are input to the ECU 10. The ECU 10 calculates the engine load of the internal combustion engine 1 on the basis of the output signal of the accelerator position sensor 7 and calculates the engine speed of the internal combustion engine 1 on the basis of the output signal of the crank position sensor 8. Moreover, the ECU 10 estimates the flow rate of the exhaust gas flowing into the SCR catalyst 51 on the basis of the output value of the air flow meter 40 and estimates the temperature of the SCR catalyst 51 on the basis of the output value of the temperature sensor 56. The flow rate of the exhaust gas flowing into the SCR catalyst 51 will be also referred to as the "exhaust gas flow rate", and the temperature of the SCR catalyst 51 will be also referred to as the "SCR catalyst temperature" hereinafter. While in the illustrative configuration shown in Fig. 1 the temperature sensor 56 is provided in the exhaust passage 5 between the NSR catalyst 50 and the SCR catalyst 51, the temperature sensor 56 may be provided downstream of the SCR catalyst 51. When the temperature sensor 56 is provided downstream of the SCR catalyst 51 also, the ECU 10 can estimate the SCR catalyst temperature on the basis of the output value of the temperature sensor 56. The ECU 10 is also electrically connected with various components including the fuel injection valve 3, the throttle valve 41, and the urea solution addition valve 52. These components are controlled by the ECU 10.

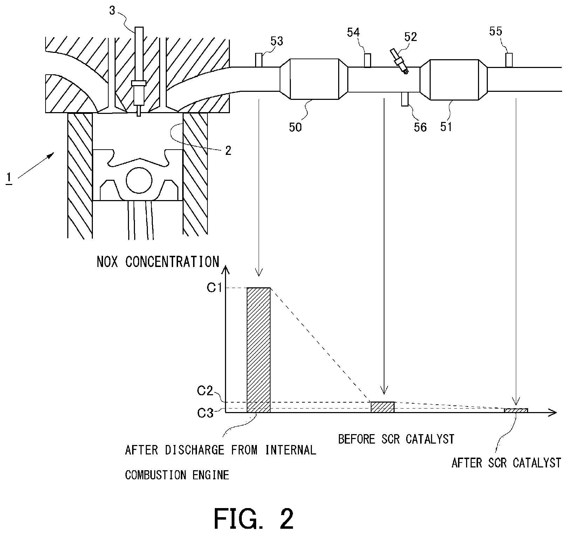

Now, the NOx concentration measured by the first NOx sensor 53, the second NOx sensor 54, and the third NOx sensor 55 in the exhaust gas purification apparatus having the NSR catalyst 50 and the SCR catalyst 51 according to the embodiment will be described with reference to Fig. 2. Fig. 2 is a diagram showing the NOx concentration in the exhaust gas discharged from the internal combustion engine before flowing into the NSR catalyst 50 (measured by the first NOx sensor 53), the NOx concentration in the exhaust gas after passing through the NSR catalyst 50 and before flowing into the SCR catalyst 51 (measured by the second NOx sensor 54), and the NOx concentration in the exhaust gas after passing through the SCR catalyst 51 (measured by the third NOx sensor 55), when the exhaust gas discharged from the internal combustion engine 1 flows down in the exhaust passage 5 through the NSR catalyst 50 and the SCR catalyst 51 in order.

As shown in Fig. 2, the NOx (at concentration C1) discharged from the internal combustion engine 1 is stored, adsorbed, or reduced by the NSR catalyst 50 for the most part, and the NOx concentration measured in the region downstream of the NSR catalyst 50 and before the SCR catalyst 51 drops to concentration C2. The NOx is further reduced by the SCR catalyst 51, resulting in very low NOx concentration (at concentration C3) in the exhaust gas in the region downstream of the SCR catalyst 51. In the exhaust gas purification apparatus including the above-described structure, the difference between the NOx concentration C2 in the region upstream of the SCR catalyst 51 and the NOx concentration C3 in the region downstream of the SCR catalyst 51 is relatively small.

In the case of the exhaust gas purification apparatus according to the embodiment in which the difference between the NOx concentration in the region upstream of the SCR catalyst 51 and the NOx concentration in the region downstream of the SCR catalyst 51 is relatively small when the SCR catalyst 51 is normal, the NOx removal rate with the SCR catalyst 51 does not drop greatly even when the SCR catalyst 51 has an abnormality in some cases. For this reason, if abnormality diagnosis of the SCR catalyst is performed based on the NOx removal rate, the accuracy of diagnosis may be deteriorated. Moreover, in the exhaust gas purification apparatus according to the embodiment, if the NOx removal rate with the SCR catalyst 51 is calculated based on the difference between the NOx concentration in the region upstream of the SCR catalyst 51 and the NOx concentration in the region downstream of the SCR catalyst 51, the calculated NOx removal rate is apt to be affected relatively greatly by measurement errors of the NOx concentrations. Hence, if abnormality diagnosis of the SCR catalyst is performed based on the NOx removal rate, there is a possibility that a correct diagnosis cannot be made.

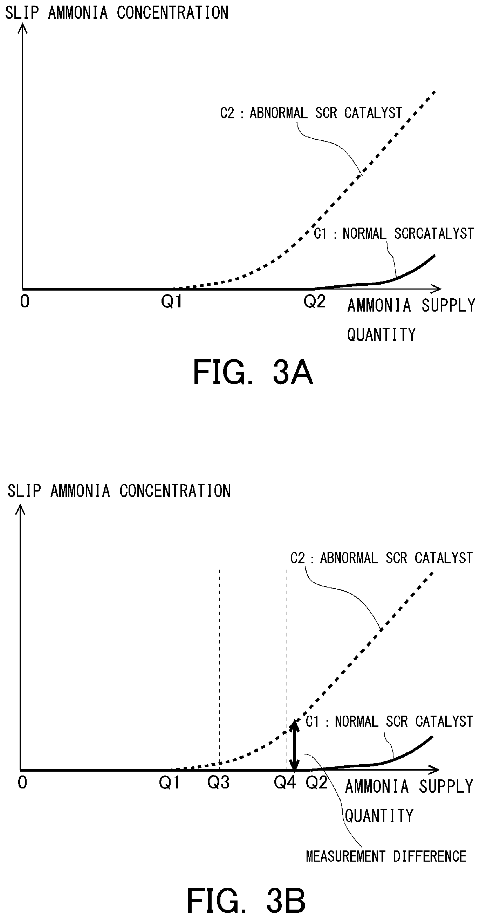

Next, we will discuss a case where the SCR catalyst 51 is normal and a case where the SCR catalyst 51 is abnormal in comparison in abnormality diagnosis of the SCR catalyst 51 using ammonia slipping out of the SCR catalyst 51, with reference to Fig. 3A. Fig. 3A is a graph showing relationship between the quantity of ammonia supplied to the SCR catalyst 51 and the concentration of ammonia slipping out of the SCR catalyst 51 (which will also be referred to as the "slip ammonia concentration" hereinafter) in a case where the SCR catalyst 51 is normal and in a case where the SCR catalyst 51 is abnormal in comparison. In Fig. 3A, the solid curve C1 represents the relationship in the case where the SCR catalyst 51 is normal, and the dotted curve C2 represents the relationship in the case where the SCR catalyst 51 is abnormal. In both cases, it is assumed that the amount of ammonia adsorbed in the SCR catalyst 51 before the supply of ammonia to the SCR catalyst 51 is started is zero. Furthermore, it is assumed that the SCR catalyst temperature, the flow rate of the exhaust gas flowing into the SCR catalyst 51, and the NOx concentration in the exhaust gas are the same in both cases.

In this SCR catalyst 51, the amount of ammonia that the SCR catalyst 51 can adsorb changes depending on the degree of progress of deterioration (or the degree of deterioration) even when the SCR catalyst 51 is in a normal condition. The solid curve C1 shown in Fig. 3A represents the aforementioned relationship in a case where the SCR catalyst 51 is in a specific deteriorated condition in which the SCR catalyst 51 is regarded to be normal. The state represented by the dotted curve C2 in Fig. 3A in which the SCR catalyst 51 has an abnormality is, for example, a state in which the SCR catalyst 51 cannot remove NOx sufficiently, so that emissions exceed the OBD limit set by regulations.

As shown in Fig. 3A, if the SCR catalyst 51 is normal, the slip ammonia concentration is substantially equal to zero when the quantity of ammonia supplied is smaller than Q2. In other words, substantially the entirety of ammonia supplied to the SCR catalyst 51 is adsorbed by the SCR catalyst 51 or used in reduction of NOx flowing into the SCR 51, and ammonia scarcely slips out of the SCR catalyst 51. If the SCR catalyst 51 has an abnormality, the slip ammonia concentration starts to increase from zero when the quantity of ammonia supplied reaches Q1 smaller than Q2. When the SCR catalyst 51 has an abnormality, the amount of ammonia that the SCR catalyst 51 can adsorb is smaller than that when the SCR catalyst 51 is normal. When the quantity of ammonia supplied reaches or exceeds Q1, ammonia that the SCR catalyst 51 cannot adsorb slips out of the SCR catalyst 51.

In the exhaust gas purification apparatus according to the embodiment, a large part of NOx discharged from the internal combustion engine 1 is stored, adsorbed, or reduced by the NSR catalyst 50, and consequently the NOx concentration in the exhaust gas flowing into the SCR catalyst 51 is low, as described above. Then, the quantity of NOx reduced in the SCR catalyst 51 is small, and therefore the quantity of urea solution supplied by the urea solution addition valve 52 for reduction of NOx or the quantity of ammonia supplied is small. As shown in Fig. 3A, when the quantity of ammonia supplied is small, for example, when the quantity of ammonia supplied is smaller than Q1, ammonia scarcely slips out of the SCR catalyst 51, whether the SCR catalyst 51 is normal or abnormal. Therefore, in that case, if abnormality diagnosis of the SCR catalyst 51 is performed based on the ammonia concentration in the region downstream of the SCR catalyst 51, there is a possibility that the SCR catalyst 51 may not be diagnosed as abnormal even if the SCR catalyst has an abnormality.

Fig. 3B is, like Fig. 3A, a graph showing relationship between the quantity of ammonia supplied to the SCR catalyst 51 and the slip ammonia concentration in a case where the SCR catalyst 51 is normal and in a case where the SCR catalyst 51 is abnormal in comparison. As shown in Fig. 3B, if the quantity of ammonia supplied is Q3 when the abnormality diagnosis of the SCR catalyst 51 is performed, ammonia does not slip in the case where the SCR catalyst 51 is normal, but ammonia slips in the case where the SCR catalyst 51 has an abnormality. Then, when the SCR catalyst 51 is normal, a relatively large quantity of ammonia that would lead to slip of ammonia out of the SCR catalyst 51 if the SCR catalyst 51 had an abnormality is adsorbed in the SCR catalyst 51, which is in a normal condition. The aforementioned quantity Q3 of ammonia supplied is larger than Q1, smaller than Q2, and close to Q1. This quantity Q3 of ammonia supplied is larger than the quantity of ammonia (e.g. smaller than Q1) that is to be supplied for the purpose of reduction of NOx during the normal operation of the internal combustion engine in the exhaust gas purification apparatus according to the embodiment, which is configured in such a way that the NOx concentration in the exhaust gas flowing into the SCR catalyst 51 is relatively low. Setting the quantity of ammonia supplied to Q3 larger than the quantity of ammonia to be supplied during the normal operation of the internal combustion engine 1 enables the abnormality diagnosis of the SCR catalyst 51 to be performed based on the ammonia concentration in the region downstream of the SCR catalyst 51.

As shown in Fig. 3B, if the quantity of ammonia supplied is set to Q4 when the abnormality diagnosis of the SCR catalyst 51 is performed, the slip ammonia concentration is large in the case where the SCR catalyst 51 has an abnormality. The aforementioned quantity Q4 of ammonia supplied is larger than Q1, smaller than Q2, and close to Q2. Then, the difference between the slip ammonia concentration in the case where the SCR catalyst 51 is normal and the slip ammonia concentration in the case where the SCR catalyst 51 is abnormal is relatively large. This difference will be also referred to as the "measurement difference" hereinafter.

As will be understood from the above, in the exhaust gas purification apparatus according to the embodiment, which is configured in such a way that the NOx concentration in the exhaust gas flowing into the SCR catalyst 51 is relatively low, when the abnormality diagnosis of the SCR catalyst 51 is performed using ammonia slipping out of the SCR catalyst 51, it is not possible to perform the abnormality diagnosis of the SCR catalyst 51 correctly based on the ammonia concentration in the region downstream of the SCR catalyst 51, unless the quantity of ammonia supplied is larger than Q1 and smaller than Q2, in other words, unless urea solution is supplied to the exhaust gas through the urea solution addition valve 52 in a quantity large enough that a relatively large quantity of ammonia that will lead to slip of ammonia out of the SCR catalyst 51 if the SCR catalyst is abnormal will be adsorbed by the SCR catalyst 51 if the SCR catalyst is normal. For this reason, in the apparatus according to the embodiment, the ECU 10 is configured to supply urea solution through the urea solution addition valve 52 in a supply quantity for diagnosis that will be described later when performing the abnormality diagnosis.

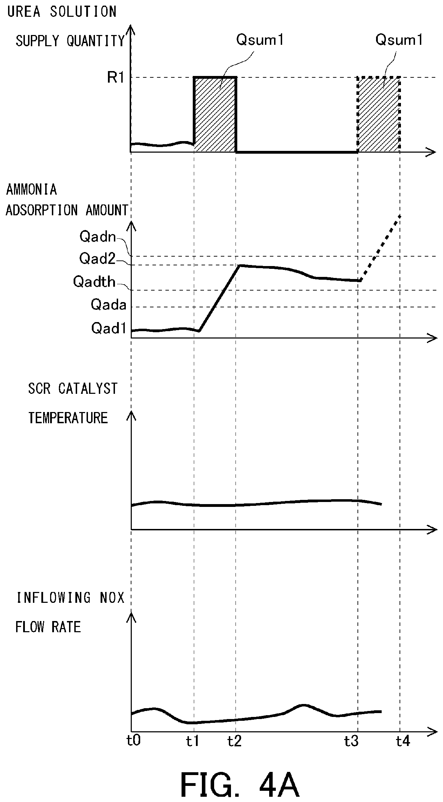

Fig. 4A shows change with time of the quantity of urea solution supplied through the urea solution addition valve 52 per unit time, the ammonia adsorption amount, the SCR catalyst temperature, and the flow rate of NOx flowing into the SCR catalyst 51 (which will also be referred to as the "inflowing NOx flow rate" hereinafter) while the abnormality diagnosis of the SCR catalyst 51 is performed by the ECU 10, which serves as the abnormality diagnosis system of an exhaust gas purification apparatus according to the present invention. The ammonia adsorption amount mentioned above refers to an estimated value of the amount of ammonia adsorbed in the SCR catalyst 51 that is estimated by the ECU 10 on the assumption that the SCR catalyst 51 is normal. The ECU 10 can estimate the ammonia adsorption amount as such by a well-known method. The ECU 10 functions as the estimation means according to the present invention in estimating the ammonia adsorption amount. In the second graph in Fig. 4A showing change with time of the ammonia adsorption amount, Qadn denotes the amount of ammonia adsorbed in the SCR catalyst 51 at which slip of ammonia out of the SCR catalyst 51 starts if the SCR catalyst 51 is in a specific deterioration condition that is regarded as normal. This amount of ammonia adsorbed will also be referred to as the "slip start adsorption amount in normal condition" hereinafter. In the same graph, Qada denotes the amount of ammonia adsorbed in the SCR catalyst 51 at which slip of ammonia out of the SCR catalyst 51 starts if the SCR catalyst 51 is in a condition in which the SCR catalyst 51 is diagnosed as abnormal by the abnormality diagnosis system for the exhaust gas purification apparatus according to the present invention. This amount of ammonia adsorbed will also be referred to as the "slip start adsorption amount in abnormal condition" hereinafter. The aforementioned condition in which the SCR catalyst 51 is diagnosed as abnormal is, for example, a condition in which the SCR catalyst 51 cannot remove NOx sufficiently, so that emissions exceed the OBD limit set by regulations.

In the control shown in Fig. 4A, the condition for performing the abnormality diagnosis of the SCR catalyst 51 is met at time t1. The abnormality diagnosis performed at that time will be referred to as the "latest abnormality diagnosis". In the control shown in Fig. 4A, the condition for performing the abnormality diagnosis of the SCR catalyst 51 is also met at time t3 after the completion of the latest abnormality diagnosis. The abnormality diagnosis performed at that time will be referred to as the "next abnormality diagnosis" in relation to the latest abnormality diagnosis. The condition for performing the aforementioned next abnormality diagnosis is met, for example, when the vehicle provided with the internal combustion engine 1 has travelled a predetermined distance or the internal combustion engine 1 has operated for a predetermined length of time after the completion of the latest abnormality diagnosis, or when the internal combustion engine 1 has been stopped and restarted afterward.

As shown in Fig. 4A, when the condition for performing the abnormality diagnosis is met at time t1, urea solution is supplied through the urea solution addition valve 52 in a supply quantity R1 per unit time. As the supply of urea solution is started, the ammonia adsorption amount starts to increase, which has been Qad1 smaller than the slip start adsorption amount in abnormal condition Qada before time t1. Over the period from time t1 to time t2, the urea solution is supplied in a quantity Qsum1, which is represented by the hatched area in Fig. 4A. In consequence, the ammonia adsorption amount reaches an amount Qad2 that is larger than the slip start adsorption amount in abnormal condition Qada and smaller than the slip start adsorption amount in normal condition Qadn. The aforementioned quantity Qsum1 of urea solution supplied is the supply quantity for diagnosis, which is the quantity of urea solution supplied by the urea solution addition valve 52 when the abnormality diagnosis is performed.

The aforementioned supply quantity for diagnosis is a predetermined fixed quantity larger than the quantity of urea solution that is supplied by the urea solution addition valve 52 for the purpose of reduction of NOx by the SCR catalyst 51. The latter quantity will also be referred to as the "quantity required for reduction" hereinafter. The quantity required for reduction is the quantity of urea solution that is supplied for the purpose of reduction of NOx during the normal operation of the internal combustion engine 1. The supply quantity for diagnosis is a predetermined quantity. In this embodiment, the aforementioned control of supplying urea solution through the urea solution addition valve 52 in the predetermined fixed quantity larger than the quantity required for reduction when performing the abnormality diagnosis will be referred to as the "supply control". The ECU 10 functions as the supply control means according to the first aspect of the present invention in performing the supply control.

As shown in Fig. 4A, if ammonia does not flow (or slips) out of the SCR catalyst 51 but adsorbed by the SCR catalyst 51 when urea solution is supplied in the supply quantity for diagnosis, the SCR catalyst 51 does not have an abnormality. If the SCR catalyst 51 has an abnormality at that time, ammonia will flow downstream of the SCR catalyst 51 during the supply of urea solution in the supply quantity for diagnosis, because the SCR catalyst 51 cannot adsorb an amount of ammonia larger than the slip start adsorption amount in abnormal condition Qada. The SCR catalyst temperature and the inflowing NOx flow rate depend on the operation state of the internal combustion engine 1.

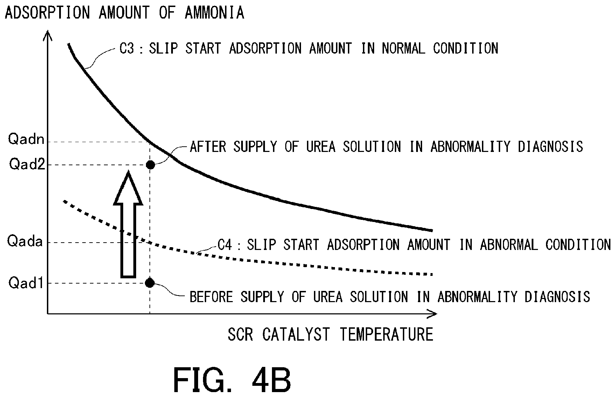

The change of the ammonia adsorption amount Qad1 to Qad2 shown in Fig. 4A will be specifically described with reference to Fig. 4B. Fig. 4B is a graph showing the relationship between the amount of ammonia adsorbed in the SCR catalyst 51 and the SCR catalyst temperature, where the amount of ammonia adsorbed in the SCR catalyst 51 in a normal condition before the supply of urea solution in the abnormality diagnosis and the amount of ammonia adsorbed in the SCR catalyst 51 after the supply of urea solution are shown. In Fig. 4B, the solid curve C3 represents the slip start adsorption amount in normal condition, and the dotted curve C4 represents the slip start adsorption amount in abnormal condition. The slip start adsorption amount in normal condition and the slip start adsorption amount in abnormal condition both tend to decrease with rising SCR catalyst temperature. At the same SCR catalyst temperature, the slip start adsorption amount in abnormal condition is smaller than the slip start adsorption amount in normal condition.

As shown in Fig. 4B, after the supply of urea solution in the abnormality diagnosis (i.e. after the supply of urea solution in the quantity Qsum1 shown in Fig. 4A), the amount of ammonia adsorbed in the SCR catalyst 51 is Qad2, which is larger than the slip start adsorption amount in abnormal condition Qada and smaller than the slip start adsorption amount in normal condition Qadn. If the SCR catalyst 51 has an abnormality at the time when urea solution is supplied in the process of abnormality diagnosis, the SCR catalyst 51 cannot adsorb ammonia fully when urea solution is supplied in the quantity Qsum1 shown in Fig. 4A, and a quantity of ammonia substantially equal to Qad2 minus Qada will slip out of the SCR catalyst 51.

Ammonia slips out of the SCR catalyst 51 as above, and the ammonia concentration is measured by the third NOx sensor 55. Thus, it is possible to diagnose abnormality of SCR catalyst 51 based on the ammonia concentration in the region downstream of the SCR catalyst 51.

Referring back to Fig. 4A, in the apparatus according to the embodiment in which the inflowing NOx flow rate is relatively low, the rate of decrease of the ammonia adsorption amount Qad2 after time t2 is low. At time t3 at which the condition for performing the next abnormality diagnosis is met, the ammonia adsorption amount is larger than a specific upper limit adsorption amount Qadth. The specific upper limit adsorption amount Qadth mentioned above is an upper limit of the ammonia adsorption amount at which the abnormality diagnosis of the SCR catalyst 51 is allowed to be performed. For instance, the specific upper limit adsorption amount Qadth is defined as such an ammonia adsorption amount that if urea solution is supplied in the supply quantity for diagnosis larger than the quantity required for reduction in the process of abnormality diagnosis in the state in which the ammonia adsorption amount is larger than the specific upper limit adsorption amount Qadth, the adsorption capacity of the SCR catalyst 51 is exceeded even if the SCR catalyst 51 is normal and slip of ammonia out of the SCR catalyst 51 can result. If the supply of urea solution in the quantity Qsum1 is started in the process of the next abnormality diagnosis at time t3, the ammonia adsorption amount reaches the slip start adsorption amount in normal condition Qadn, so that ammonia that the SCR catalyst 51 cannot absorb slips out of it, even when the SCR catalyst 51 is normal.

To avoid the above situation, if the ammonia adsorption amount is larger than the specific upper limit adsorption amount Qadth at a specific time after the completion of the latest abnormality diagnosis and before the start of the next abnormality diagnosis, the ECU 10 performs control for reducing the amount of ammonia adsorbed in the SCR catalyst 51 so as to make the ammonia adsorption amount after the completion of the next supply control larger than the slip start adsorption amount in abnormal condition and smaller than the slip start adsorption amount in a normal condition. In this embodiment, this control performed by the ECU 10 will be referred to as the "reducing control". The ECU 10 functions as the reducing control means according to the first aspect of the present invention in performing the reducing control.

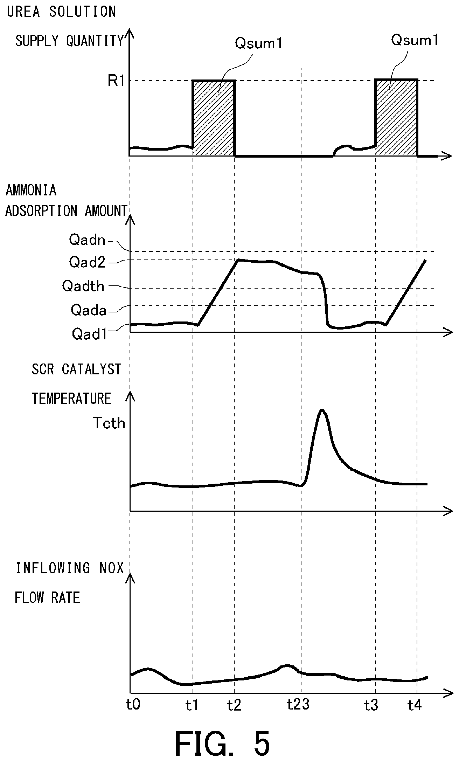

The reducing control performed at the aforementioned specific time will be described with reference to Fig. 5. Fig. 5 is a graph showing change with time of the quantity of urea solution supplied by the urea solution addition valve 52 per unit time, the ammonia adsorption amount, the SCR catalyst temperature, and the inflowing NOx flow rate when the supply control and the reducing control are performed by the ECU 10. In the control shown in Fig. 5, the reducing control is implemented as catalyst temperature raising control for raising the temperature of the SCR catalyst to a specific temperature or higher. In the control shown in Fig. 5, the supply control is started at time t1 at which the condition for performing the latest abnormal diagnosis is met and terminated at time t2. Moreover, in the control shown in Fig. 5, the supply control is started at time t3 at which the condition for performing the next abnormal diagnosis is met and terminated at time t4.

As shown in Fig. 5, the ammonia adsorption amount Qad2 at time t2 is larger than the specific upper limit adsorption amount Qadth. In the exhaust gas purification apparatus according to the embodiment, a large part of NOx discharged from the internal combustion engine 1 is stored, adsorbed, or reduced by the NSR catalyst 5, and the inflowing NOx flow rate is low, as described above. Therefore, the quantity of ammonia needed to reduce the NOx flowing into the SCR catalyst 51 is small, and the rate of decrease of the ammonia adsorption amount, which is made relatively large by the supply control, is low. In consequence, in the change with time of ammonia adsorption amount shown in Fig. 5, the ammonia adsorption amount remains larger than the specific upper limit adsorption amount Qadth after the completion of the supply control. Therefore, in the control shown in Fig. 5, the catalyst temperature raising control is performed as the reducing control at time t23, which is a specific time after the completion of the latest abnormality diagnosis and before the start of the next abnormality diagnosis.

As above, the catalyst temperature raising control is started at time t23 to raise the SCR catalyst temperature to the specific temperature Tcth or higher, and the SCR catalyst temperature rises to reach or exceed the specific temperature after the lapse of a certain delay time since time t23. Since the amount of ammonia that the SCR catalyst 51 can adsorb changes depending on the SCR catalyst temperature, the decrease in the quantity of ammonia achieved by the catalyst temperature raising control can be controlled by adjusting the specific temperature Tcth, which includes adjusting the SCR catalyst temperature that is made equal to or higher than the specific temperature Tcth by the catalyst temperature raising control, or by adjusting the time at which the SCR catalyst temperature is made equal to or higher than the specific temperature Tcth. In the catalyst temperature raising process, the amount of ammonia adsorbed in the SCR catalyst 51 is reduced taking account of the supply quantity for diagnosis (Qsum1) so as to make the ammonia adsorption amount after the completion of the next supply control larger than the slip start adsorption amount in abnormal condition Qada and smaller than the slip start adsorption amount in normal condition Qadn. The slip start adsorption amount in normal condition Qadn may be an amount that may vary depending on the specific deterioration condition. Specifically, the slip start adsorption amount in normal condition Qadn may be either an amount that varies depending on the condition of deterioration of the SCR catalyst 51 during the operation of the internal combustion engine 1 or an amount corresponding to a predetermined fixed deterioration condition that does not depend on the condition of deterioration of the SCR catalyst 51 during the operation of the internal combustion engine 1.

After the ammonia adsorption amount has been reduced by the catalyst temperature raising control, the supply of urea solution through the urea solution addition valve 52 is restarted. Then, the supply control is started at time t3 at which the condition for performing the next abnormality diagnosis is met, and the urea solution is supplied in the quantity Qsum1 (represented by the hatched area in Fig. 5) over the period from time t3 to time t4. In consequence, the ammonia adsorption amount becomes larger than the slip start adsorption amount in abnormal condition Qada and smaller than the slip start adsorption amount in normal condition Qadn. In other words, the catalyst temperature raising control reduces the amount of ammonia adsorbed in the SCR catalyst in such a way that the ammonia adsorption amount after the completion of the next supply control started at time t3 will be larger than the slip start adsorption amount in abnormal condition Qada and smaller than the slip start adsorption amount in normal condition Qadn. Therefore, when urea solution is supplied in the supply quantity for diagnosis Qsum1 by the next supply control, the ammonia adsorption amount does not reach the slip start adsorption amount in normal condition Qadn.

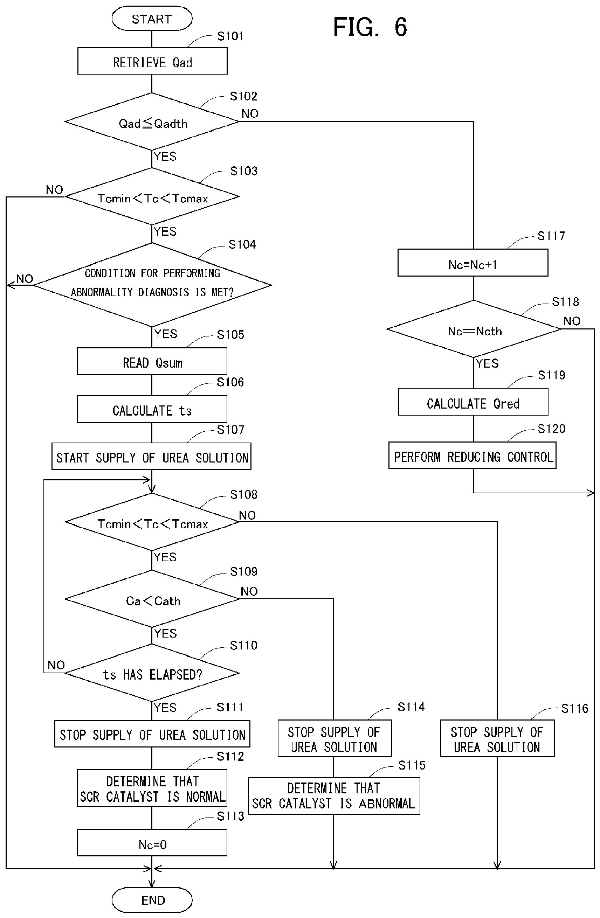

The flow of control performed by the ECU 10 will be described with reference to Fig. 6. The ECU 10 serves as the abnormality diagnosis system for an exhaust gas purification apparatus according to the present invention. Fig. 6 is a flow chart showing the control flow according to the embodiment of the first aspect of the present invention. In this embodiment, this flow is executed by the ECU 10 repeatedly at predetermined calculation intervals during the operation of the internal combustion engine 1. The ECU 10 also performs estimation of the ammonia adsorption amount Qad by a known separate flow other than this flow at predetermined calculation intervals.

In this flow, firstly in step S101, the ammonia adsorption amount Qad is retrieved. In step S101, the ammonia adsorption amount Qad estimated by the known flow other than this flow is retrieved. As described above, the ammonia adsorption amount Qad is the amount of ammonia adsorbed in the SCR catalyst 51 that is estimated on the assumption that the SCR catalyst 51 is normal.

Then, in step S102, it is determined whether or not the ammonia adsorption amount Qad retrieved in step S101 is equal to or smaller than the specific upper limit adsorption amount Qadth. As described above, the specific upper limit adsorption amount Qadth is an upper limit of the ammonia adsorption amount at which the abnormality diagnosis of the SCR catalyst 51 is allowed to be performed, and it is defined, for example, as such an ammonia adsorption amount that if urea solution is supplied in the supply quantity for diagnosis in the process of abnormality diagnosis in the state in which the ammonia adsorption amount is larger than the specific upper limit adsorption amount Qadth, the adsorption capacity of the SCR catalyst 51 is exceeded even if the SCR catalyst 51 is normal, possibly leading to slip of ammonia out of the SCR catalyst 51. The value of the specific upper limit adsorption amount Qadth is stored in the ROM of the ECU 10 in advance. If an affirmative determination is made in step S102, the ECU 10 executes the processing of step S103 next. If a negative determination is made in step S102, the ECU 10 executes the processing of step S117 next.

If an affirmative determination is made in step S102, then in step S103, it is determined whether or not the SCR catalyst temperature Tc is higher than a predetermined lower limit temperature Tcmin and lower than a predetermined upper limit temperature Tcmax. As described in the above description with Fig. 4B, the slip start adsorption amount in normal condition and the slip start adsorption amount in abnormal condition both tend to decrease with rising SCR catalyst temperature, and ammonia is apt to slip when the SCR catalyst temperature is higher than a certain temperature, even if the SCR catalyst 51 is normal. The predetermined upper limit temperature Tcmax is set as the SCR catalyst temperature above which ammonia is apt to slip even if the SCR catalyst 51 is normal. In the condition in which the SCR catalyst temperature is lower than a certain temperature, the supply of urea solution to the exhaust gas through the urea solution addition valve 52 is disabled in view of problems such as deposit of urea solution. The predetermined lower limit temperature Tcmin is set as the SCR catalyst temperature below which the supply of urea solution to the exhaust gas through the urea solution addition valve 52 is disabled. The predetermined lower limit temperature Tcmin and the predetermined upper limit temperature as such are stored in the ROM of the ECU 10 in advance. The SCR catalyst temperature Tc is calculated on the basis of the output signal of the temperature sensor 56. If an affirmative determination is made in step S103, the ECU 10 executes the processing of step S104 next. If a negative determination is made in step S103, the execution of this flow is terminated. If a negative determination is made in step S103, the abnormality diagnosis of the SCR catalyst 51 is not performed in this embodiment. Therefore, the processing of step S103 may be considered, in a sense, to be a part of the processing of S104 described below.

If an affirmative determination is made in step S103, then in step S104, it is determined whether or not the condition for performing the abnormality diagnosis of the SCR catalyst 51 is met. In step S104, an affirmative determination is made, for example, if the vehicle provided with the internal combustion engine 1 has travelled a predetermined distance or the internal combustion engine 1 has operated for a predetermined length of time after the completion of the latest abnormality diagnosis, or if the internal combustion engine 1 has been stopped and restarted afterward. The above specific conditions are merely for illustrative purposes; in step S104, a determination as to whether or not the condition for performing the abnormality diagnosis of the SCR catalyst 51 is met may be made based on any known technology. If an affirmative determination is made in step S104, the ECU 10 executes the processing of step S105 next. If a negative determination is made in step S104, the execution of this flow is terminated.

If an affirmative determination is made in step S104, then in step S105, the supply quantity for diagnosis Qsum is read. The supply quantity for diagnosis Qsum is the quantity of urea solution that is supplied through the urea solution addition valve 52 when the diagnosis is performed. The supply quantity for diagnosis Qsum is a predetermined fixed quantity larger than the quantity required for reduction, as described above. This value of the supply quantity for diagnosis Qsum is stored in the ROM of the ECU 10 in advance.

Then, in step S106, a urea solution supply time ts is calculated. The urea solution supply time ts is a length of time over which urea solution is to be supplied through the urea solution addition valve 52 when the abnormality diagnosis is performed. In step S106, on the basis of the supply quantity for diagnosis Qsum read in step S105, the urea solution supply time ts is calculated in such a way that urea solution is supplied at a supply rate that enables the SCR catalyst 51 to adsorb ammonia appropriately.

Then, in step S107, the supply of urea solution through the urea solution addition valve 52 is started. Urea solution will be supplied in the supply quantity for diagnosis Qsum read in step S105 by the urea solution addition valve 52 with the lapse of the urea solution supply time ts calculated in step S106 after the start of the supply of urea solution in step S107. Thus, when performing the abnormality diagnosis, the ECU 10 starts the supply control in step S107 to supply urea solution through the urea solution addition valve 52 in the supply quantity for diagnosis Qsum read in step S105.

Then, in step S108, it is determined whether or not the SCR catalyst temperature Tc is higher than the predetermined lower limit temperature Tcmin and lower than the predetermined upper limit temperature Tcmax. The processing of step S108 is the same as the processing of step S103 described above. Since the SCR catalyst Tc can change while the supply control is performed, the above described determination is made in step S108 with the current SCR catalyst temperature Tc during the supply control. If an affirmative determination is made in step S108, the ECU 10 executes the processing of step S109 next. If a negative determination is made in step S108, the ECU 10 executes the processing of step S116 next.

If an affirmative determination is made in step S108, then in step S109, it is determined whether or not the concentration Ca measured by the third NOx sensor 55 is lower than a threshold concentration Cath. The threshold concentration Cath is a threshold for determining slip of ammonia out of the SCR catalyst 51. If the measured concentration Ca is equal to or higher than the threshold concentration Cath, it is determined in the abnormality diagnosis of the SCR catalyst 51 performed by this flow that there is slip of ammonia. The threshold concentration Cath is stored in the ROM of the ECU 10 in advance. If an affirmative determination is made in step S109, the ECU 10 executes the processing of step S110 next. If a negative determination is made in step S109, the ECU 10 executes the processing of step S114 next.

If an affirmative determination is made in step S109, then in step S110, it is determined whether or not the urea solution supply time ts calculated in step S106 has elapsed. If an affirmative determination is made in step S110, urea solution has been supplied through the urea solution addition valve 52 in the supply quantity for diagnosis Qsum. Then, the ECU 10 executes the processing of step S111 next. If a negative determination is made in step S110, then the ECU 10 returns to the processing of step S108, where the ECU 10 continues the supply of urea solution through the urea solution addition valve 52.

If an affirmative determination is made in step S110, then in step S111, the supply of urea solution through the urea solution supply valve 52 is stopped. Thus, the supply control is terminated in step S111.

Then, in step S112, it is determined that the SCR catalyst 51 is normal. The processing of step S112 executed in the case where the measured concentration Ca is equal to or lower than the threshold concentration Cath, while urea solution has been supplied in the supply quantity for diagnosis Qsum by the supply control. Then, in other words, the SCR catalyst 51 is in the state in which it is determined by the abnormality diagnosis of the SCR catalyst 51 performed by this flow that slip of ammonia out of the SCR catalyst 51 is not occurring while the ammonia adsorption amount is larger than the slip start adsorption amount in abnormal condition and smaller than the slip start adsorption amount in normal condition. Therefore, it may be concluded that the SCR catalyst 51 is normal. In contrast, the case in which the SCR catalyst is diagnosed as abnormal is, for example, a case in which the SCR catalyst 51 cannot remove NOx sufficiently, so that emissions exceed the OBD limit set by regulations, and it is determined that slip of ammonia out of the SCR catalyst 51 occurs while urea solution is being supplied so as to make the ammonia adsorption amount larger than the slip start adsorption amount in abnormal condition and smaller than the slip start adsorption amount in normal condition, as will be described later in the description of step S115.

Then, in step S113, a counter Nc that controls the timing of performing the reducing control is initialized to zero. The reducing control will be described later. After the completion of the processing of step S113, the execution of this flow is terminated.

If a negative determination is made in step S109, then in step S114, the supply of urea solution through the urea solution addition valve 52 is stopped. The case in which the supply of urea solution through the urea solution addition valve 52 is stopped in step S114 is the case in which the supply control is terminated while the supply control is in progress because the measured concentration Ca reaches or exceeds the threshold concentration Cath while the supply control is being performed. In that case, the quantity of urea solution supplied has not reached the supply quantity for diagnosis Qsum.

Then, in step S115, it is determined that the SCR catalyst 51 has an abnormality. In the case which the processing of step S115 is executed, the SCR catalyst 51 is in the state in which it is determined by the abnormality diagnosis of the SCR catalyst 51 performed by this flow that slip of ammonia out of the SCR catalyst 51 is occurring while urea solution is being supplied so as to make the ammonia adsorption amount in the SCR catalyst 51 larger than the slip start adsorption amount in abnormal condition and smaller than the slip start adsorption amount in normal condition. Therefore, the ECU 10 can determine correctly that the SCR catalyst 51 has an abnormality. After the completion of the processing of step S115, the execution of this flow is terminated.

As described above, it is determined whether the SCR catalyst 51 is normal or has an abnormality by the comparison of the measured concentration Ca and the threshold concentration Cath in step S109. In other words, the abnormality diagnosis of the SCR catalyst 51 is performed on the basis of the concentration Ca measured by the third NOx sensor 55 when urea solution is supplied by the supply control. The ECU 10 functions as the abnormality diagnosis means according to the present invention in executing the processing of steps S109, S112, and S115. There may be a time lag from the time when urea solution is supplied by the urea solution addition valve 52 to the time when the concentration of ammonia derived from the supplied urea solution is measured by the third NOx sensor 55. Therefore, the abnormality diagnosis of the SCR catalyst 51 may be performed based on the measured concentration Ca that is obtained during and after the supply of urea solution by the urea solution addition valve 52.

If a negative determination is made in step S108, then in step S116, the supply of urea solution through the urea solution addition valve 52 is stopped. The case in which the supply of urea solution through the urea solution addition valve 52 is stopped in step S116 is the case in which the supply control is terminated while it is in progress because the SCR catalyst temperature Tc becomes equal to or lower than the predetermined lower limit temperature Tcmin or equal to or higher than the predetermined upper limit temperature Tcmax while the supply control is being performed. In that case, the quantity of urea solution supplied has not reached the supply quantity for diagnosis Qsum. After the completion of the processing of step S116, the execution of this flow is terminated. After the execution of this flow is terminated, the supply control is restarted if an affirmative determination is made in step S103 next time because the SCR catalyst temperature Tc becomes higher than the predetermined lower limit temperature Tcmin and lower than the predetermined higher limit temperature Tcmax, and an affirmative determination is made in steps S102 and S104 as well.

In the case where a negative determination is made in step S102, the counter Nc is incremented by 1 in step S117. In step S118, it is determined whether or not the value of the counter Nc reaches a predetermined value Ncth. The predetermined value Ncth is a threshold used to determine whether the reducing control is to be performed or not. When the counter Nc reaches this predetermined value Ncth, the reducing control is performed. The predetermined value Ncth is stored in the ROM of the ECU 10 in advance.

In step S102 in this flow, a determination is made as to whether the supply control is allowed to be performed with the current ammonia adsorption amount Qad at the timing of performing the next abnormality diagnosis, irrespective of whether the condition for performing the abnormality diagnosis of the SCR catalyst 51 is met or not. The case in which a negative determination is made in step S102 is the case in which it is considered that performing the supply control with the current ammonia adsorption amount Qad at the timing of performing the next abnormality diagnosis probably leads to slip of ammonia that the SCR catalyst 51 cannot adsorb even if the SCR catalyst 51 is normal. In that case, the reducing control is performed immediately to reduce the amount of ammonia adsorbed in the SCR catalyst 51 in preparation for the supply control performed in the next abnormality diagnosis. Alternatively, a waiting period may be provided before the start of the reducing control. In this embodiment, the reducing control is not performed until the value of the counter Nc reaches the predetermined value Ncth. In other words, in this flow, a waiting period is provided before the start of the reducing control, and the reducing control is performed at a specific time after the completion of the latest abnormality diagnosis and before the start of the next abnormality diagnosis. In cases where the ammonia adsorption amount Qad does not become equal to or smaller than the specific upper limit adsorption amount Qadth, the reducing control is started at the specific time.

The predetermined value Ncth is set, for example, as a value corresponding to the running time of the internal combustion engine 1 since the time at which the counter Nc is set to zero. When the counter Nc is initialized to zero in step S113, the ammonia adsorption amount Qad is apt to become larger than the specific upper limit adsorption amount Qadth, and therefore a negative determination tends to be made in step S102 after the counter Nc is initialized to zero in step S113. In that case, the counter Nc is incremented by 1 in step S117. Therefore, for example, if the specific time is defined as the time at which the running time of the internal combustion engine 1 reaches one hour after the completion of the abnormality diagnosis, the predetermined value Ncth is determined on the basis of the time specified above and the calculation interval of this flow. The time to perform the reducing control may be controlled by known technique without using the counter Nc in such a way that the reducing control is performed at the specific time after the completion of the latest abnormality diagnosis and before the start of the next abnormality diagnosis. If an affirmative determination is made in step S118, the ECU 10 executes the processing of S119 next. If a negative determination is made in step S119, the execution of this flow is terminated.

If an affirmative determination is made in step S118, then in step S119, a target reduction Qred in the quantity of ammonia in the reducing control is calculated. In step S119, the target reduction Qred is calculated as such a value that makes the ammonia adsorption amount after the completion of the next supply control larger than the slip start adsorption amount in abnormal condition and smaller than the slip start adsorption amount in normal condition, taking account of the ammonia adsorption amount Qad retrieved in step S101 and the predetermined supply quantity for diagnosis Qsum.

Then in step S120, the reducing control is performed. In step S120, the above-described catalyst temperature raising control is performed as the reducing control. In the catalyst temperature raising control, adjustment of the specific temperature Tcth, which involves the adjustment of the SCR catalyst temperature, which is made equal to or higher than the specific temperature Tcth by the catalyst temperature raising control, and adjustment of the time over which the SCR catalyst temperature is made equal to or higher than the specific temperature Tcth are performed so that a reduction in the quantity of ammonia equal to the target reduction Qred calculated in step S119 will be achieved. After the completion of the processing of step S120, the execution of this flow is terminated. In step S120, NOx flow rate increasing control that will be described later may be performed as the reducing control.

The abnormality diagnosis system for the exhaust gas purification apparatus enables the abnormality diagnosis of the SCR catalyst 51 to be performed at an adequate frequency by executing the above-described control flow.

### Second Embodiment

A second embodiment of the present invention will be described. In the above-described first embodiment, the supply quantity for diagnosis is a predetermined fixed quantity larger than the quantity required for reduction. In this embodiment, the supply quantity for diagnosis is a variable quantity larger than the quantity required for reduction. The components and the control processing in the second embodiment that are substantially the same as those in the above-described first embodiment will not be described further.

In the second embodiment, when the ammonia adsorption amount at the aforementioned specific time is larger than the predetermined upper limit adsorption amount, the reducing control is performed so as to make the ammonia adsorption amount equal to or smaller than the predetermined upper limit adsorption amount. Moreover, the supply control is performed so as to make the ammonia adsorption amount after the completion of the supply control larger than the slip start adsorption amount in abnormal condition and smaller than the slip start adsorption amount in normal condition. Performing the reducing control and the supply control helps to make the ammonia adsorption amount after the completion of the supply control larger than the slip start adsorption amount in abnormal condition and smaller than the slip start adsorption amount in normal condition. This will be described in the following. The ECU 10 functions as the supply control means according to the second aspect of the present invention in performing the aforementioned supply control and as the reducing control means according to the second aspect of the present invention in performing the reducing control.

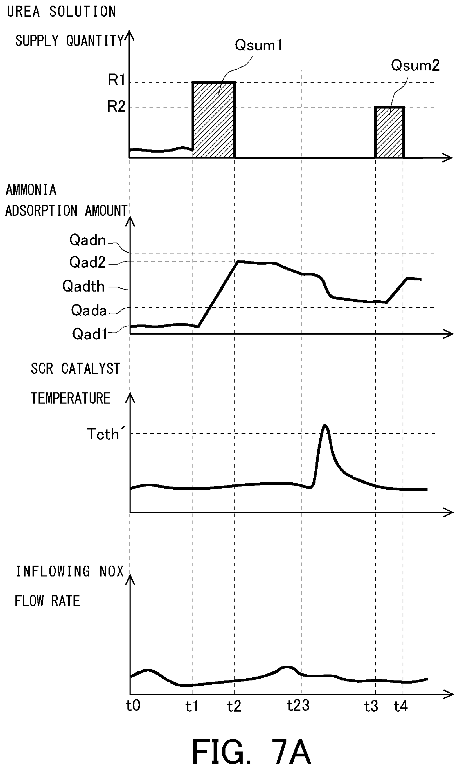

Similarly to Fig. 5, Fig. 7A is a graph showing change with time of the quantity of urea solution supplied by the urea solution addition valve 52 per unit time, the ammonia adsorption amount, the SCR catalyst temperature, and the inflowing NOx flow rate when the supply control and the reducing control are performed by the ECU 10.

In the control shown in Fig. 7A, the catalyst temperature raising control is performed as the reducing control at time t23, as in Fig. 5. In the second embodiment, the reducing control, which is different from that in the first embodiment, is performed so as to make the ammonia adsorption amount equal to or smaller than a predetermined upper limit adsorption amount Qadth. In the control shown in Fig. 7A, the catalyst temperature control that makes the SCR catalyst temperature equal to or higher than a specific temperature Tcth' is performed at time t23. The specific temperature Tcth' in the control shown in Fig. 7A is lower than the specific temperature Tcth in the catalyst temperature raising control in the above-described first embodiment. Like the specific temperature Tcth in the above-described first embodiment, the specific temperature Tcth' is a temperature at which ammonia is desorbed from the SCR catalyst 51. By performing the catalyst temperature raising control, the ammonia desorption amount is made equal to or smaller than the upper limit adsorption amount Qadth.

In the above-described first embodiment, adjustment of the specific temperature Tcth, which involves the adjustment of the SCR catalyst temperature, which is made equal to or higher than the specific temperature Tcth by the catalyst temperature raising control, and adjustment of the time over which the SCR catalyst temperature is made equal to or higher than the specific temperature Tcth are performed in the catalyst temperature raising control so that a reduction in the quantity of ammonia equal to the target reduction Qred will be achieved. In the second embodiment, the specific temperature Tcth' and the time over which the SCR catalyst temperature is made equal to or higher than the specific temperature Tcth' may be determined in advance so that the reduction in the quantity of ammonia achieved by catalyst temperature raising control will be constant.

In the control shown in Fig. 7A, since the specific temperature Tcth' is lower than the specific temperature Tcth in the above-described first embodiment, the ammonia adsorption amount at time t3 at which the condition for performing the next abnormality diagnosis is met is larger than the ammonia adsorption amount at time t3 in Fig. 5. Then, if the supply quantity for diagnosis in the next abnormality diagnosis is set equal to the supply quantity for diagnosis Qsum1 in the supply control performed in the latest abnormality diagnosis, there is a possibility that the ammonia adsorption amount after the completion of the next supply control may reach the slip start adsorption amount in normal condition Qadn. To avoid this, in the control shown in Fig. 7A, urea solution is supplied in a quantity Qsum2 smaller than the quantity Qsum1, by the supply control performed in the next abnormality diagnosis. In consequence, the ammonia adsorption amount after the completion of the next supply control is larger than the slip start adsorption amount Qada in abnormal condition and smaller than the slip start adsorption amount Qadn in normal condition.

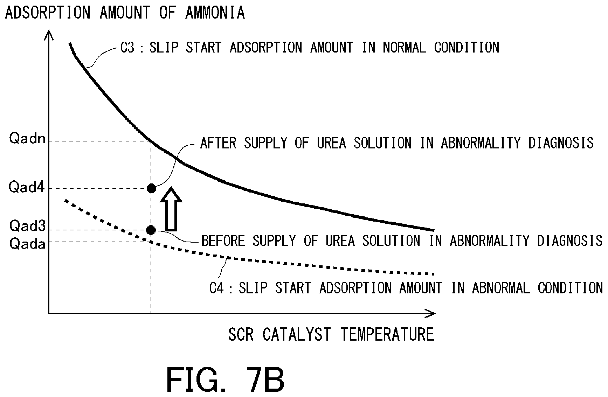

The change of the ammonia adsorption amount caused by the next supply control shown in Fig. 7A will be specifically described with reference to Fig. 7B. Fig. 7B is a graph showing the relationship between the amount of ammonia adsorbed in the SCR catalyst 51 and the SCR catalyst temperature, where the amount of ammonia adsorbed in the SCR catalyst 51 in a normal condition before the supply of urea solution in the next abnormality diagnosis and the amount of ammonia adsorbed in the SCR catalyst 51 after the supply of urea solution are shown. In Fig. 7B, the solid curve C3 represents the slip start adsorption amount in normal condition, and the dotted curve C4 represents the slip start adsorption amount in abnormal condition.

As shown in Fig. 7B, the amount of ammonia adsorbed in the SCR catalyst 51 before the supply of urea solution in the next abnormality diagnosis is Qad3, which is larger than the slip start adsorption amount in abnormal condition Qada. After the supply of urea solution in the next abnormality diagnosis (i.e. after the supply of urea solution in the quantity Qsum2 shown in Fig. 7A), the ammonia adsorption amount is Qad4, which is larger than the slip start adsorption amount in abnormal condition Qada and smaller than the slip start adsorption amount in normal condition Qadn. If the SCR catalyst 51 has an abnormality at the time when urea solution is supplied in the process of the next abnormality diagnosis, a quantity of ammonia that is derived from the quantity of urea solution Qsum2 in that supply will slip out of the SCR catalyst 51. This quantity is equal to Qad4 minus Qad3 in Fig. 7B, which shows the amount of ammonia adsorbed in the SCR catalyst 51 in a normal condition. This is because the amount of ammonia adsorbed in the SCR catalyst 51 before the supply of urea solution in the next abnormality diagnosis is equal to the slip start adsorption amount in abnormal condition Qada in that case.

The supply quantity for diagnosis Qsum2 in the supply control performed in the next abnormality diagnosis is, for example, the smallest value of the supply quantity for diagnosis, which is a variable value. This is because the amount of ammonia Qad3 adsorbed in the SCR catalyst 51 before the supply of urea solution in next abnormality diagnosis is larger than the slip start adsorption amount in abnormal condition Qada as shown in Fig. Fig. 7B, and therefore the quantity of urea solution supplied in the next supply control can be made as small as possible. It should be noted that although this supply quantity for diagnosis is the smallest quantity, it is still larger than the quantity required for reduction. The smallest supply quantity for diagnosis as such is determined in advance.

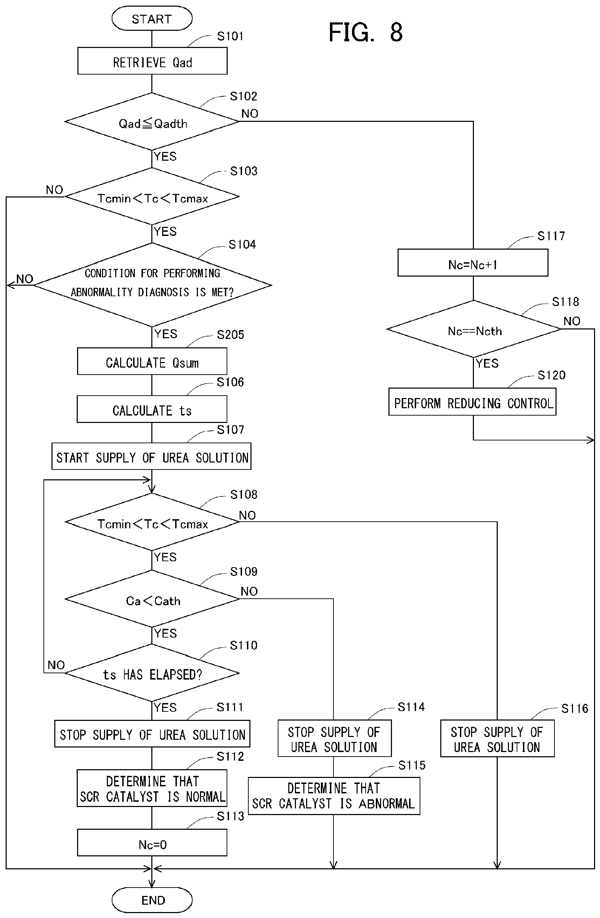

A control flow executed by the ECU 10 will be described with reference to Fig. 8. Fig. 8 is a flow chart of the control flow according to the second embodiment, which is an embodiment of the second aspect of the present invention. In the first embodiment, which is an embodiment of the first aspect of the present invention, the supply quantity for diagnosis Qsum is read in step S105 in Fig. 6 as described above. The supply quantity for diagnosis Qsum thus read is a predetermined fixed value. In the second embodiment, the supply quantity for diagnosis Qsum is calculated in step S205 in Fig. 8 when the condition for performing the abnormality diagnosis is met (i.e. when an affirmative determination is made in step S104). Specifically, the supply quantity for diagnosis Qsum is calculated as such a value that the sum of the ammonia adsorption quantity Qad retrieved in step S101 and the quantity of ammonia resulting from the supply quantity for diagnosis Qsum is larger than the slip start adsorption amount in abnormal condition and smaller than the slip start adsorption amount in normal condition, when the SCR catalyst temperature Tc is constant. The ECU 10 functions as the determination means according to the second aspect of the present invention in calculating the supply quantity for diagnosis Qsum.

In the control flow shown in Fig. 8, if an affirmative determination is made in step S118, the reducing control is performed in step S120 without calculating a target reduction Qred. This is because in this embodiment the specific temperature Tcth' and the time over which the SCR catalyst temperature is made equal to or higher than the specific temperature Tcth' may be determined in advance to achieve a constant reduction of the quantity of ammonia by the catalyst temperature raising control, as described above. In step S120, the reducing control is performed using these parameters stored in the ROM of the ECU 10.

By performing the above-described supply control and reducing control, it is possible to appropriately adjust the ammonia adsorption amount after the completion of the supply control to a value larger than the slip start adsorption amount in abnormal condition and smaller than the slip start adsorption amount in normal condition with the supply quantity for diagnosis larger than the quantity required for reduction. Executing the above-described control flow enables the abnormality diagnosis of the SCR catalyst 51 to be performed at an adequate frequency.

### Modification

A modification of the above-described second embodiment will be described. The components and the control processing in this modification that are substantially the same as those in the above-described first embodiment will not be described further.

As shown in Fig. 3B referred to above, when the quantity of ammonia supplied in the process of abnormality diagnosis of the SCR catalyst 51 is relatively large, the measurement difference is relative large. If the measurement difference is somewhat small, there may be cases where the ammonia concentration cannot be measured due to measurement error or other reasons. In the exhaust gas purification apparatus according to this modification, in which the combined concentration of NOx and ammonia in the exhaust gas in the region downstream of the SCR catalyst 51 is measured by the third NOx sensor 55, the ammonia concentration cannot be determined accurately unless the ammonia concentration in the exhaust gas in the region downstream of the SCR catalyst 51 is relatively higher than the NOx concentration in some cases. Larger measurement differences facilitate accurate determination of the ammonia concentration in the region downstream of the SCR catalyst 51 using the third NOx sensor 55.

In this modification, the supply control is performed in such a way as to make the ammonia adsorption amount after the completion of the supply control larger than the sum of the slip start adsorption amount in abnormal condition and a specific measurable ammonia quantity and smaller than the slip start adsorption amount in normal condition. The sum of the slip start adsorption amount in abnormal condition and the specific measurable ammonia quantity will also be referred to as the "abnormality diagnosis enabling quantity" hereinafter. The specific measurable ammonia quantity is determined taking account of measurement errors in the measurement of the ammonia concentration using the third NOx sensor 55 and other factors. The state in which a quantity of ammonia larger than the specific measurable ammonia quantity slips out of the SCR catalyst 51 corresponds to the state in which the aforementioned measurement difference is relatively large.

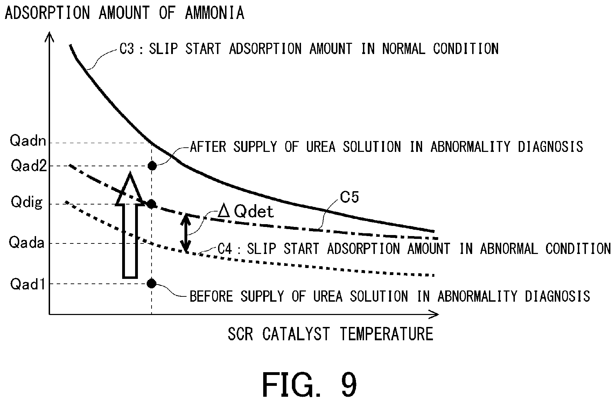

Fig. 9 is a graph showing the relationship between the amount of ammonia adsorbed in the SCR catalyst 51 and the SCR catalyst temperature, where the amount of ammonia adsorbed in the SCR catalyst 51 in a normal condition before the supply of urea solution in the abnormality diagnosis and the amount of ammonia adsorbed in the SCR catalyst 51 after the supply of urea solution are shown. Curve C5 in Fig. 9 represents the sum of the slip start adsorption amount in abnormal condition and the specific measurable ammonia quantity ΔQdet. In the control shown in Fig. 9, as the supply control is performed in such a way as to make the ammonia adsorption amount after the completion of the supply control equal to or larger than the abnormality diagnosis enabling quantity and smaller than the slip start adsorption amount in normal condition, the value Qad1 of the ammonia adsorption amount before the supply of urea solution in the abnormality diagnosis changes to the value Qad2 after the supply of urea solution.

If the SCR catalyst 51 has an abnormality at the time when urea solution is supplied in the process of abnormality diagnosis, a quantity of ammonia substantially equal to Qad2 minus Qada will slip out of the SCR catalyst 51. This quantity of slipping ammonia is larger than the specific measurable ammonia quantity ΔQdet shown in Fig. 9. In this modification, when a quantity of ammonia larger than the specific measurable ammonia quantity ΔQdet slips out of the SCR catalyst 51, the third NOx sensor 55 can measure the ammonia concentration with relatively high accuracy. Therefore, when a quantity of ammonia substantially equal to Qad2 minus Qada slips out of the SCR catalyst 51, the third NOx sensor 55 can measure the ammonia concentration with relatively high accuracy.

If the supply quantity for diagnosis is set as such a value that the sum of the ammonia adsorption amount Qad1 before the supply of urea solution in the abnormality diagnosis and the quantity of ammonia derived from the supply quantity for diagnosis is equal to or larger than the abnormality diagnosis enabling quantity Qdig defined as the sum of the slip start adsorption amount in abnormal condition Qada and the specific measurable ammonia quantity ΔQdet and smaller than the slip start adsorption amount in normal condition Qadn, the abnormality diagnosis of the SCR catalyst 51 can be performed based on the ammonia concentration in the region downstream of the SCR catalyst 51 with as high accuracy as possible.

In this modification, in step S205 in Fig. 8 referred to above, the supply quantity for diagnosis Qsum is calculated as such a value that the sum of the ammonia adsorption amount Qad retrieved in step S101 and the quantity of ammonia derived from the supply quantity for diagnosis Qsum is equal to or larger than the abnormality diagnosis enabling quantity and smaller than the slip start adsorption amount in normal condition, when the SCR catalyst temperature Tc is constant.

By performing the supply control to supply urea solution in the supply quantity for diagnosis Qsum thus calculated, the abnormality diagnosis of the SCR catalyst 51 can be performed with as high accuracy as possible. Executing the above-described decreasing control enables the abnormality diagnosis of the SCR catalyst 51 with such high accuracy to be performed at an adequate frequency.

### Third Embodiment

A third embodiment of the present invention will be described. The exhaust gas purification apparatus according to the above-described embodiments is provided with the NSR catalyst 50 for reducing NOx in the exhaust gas arranged in the exhaust passage 5 upstream of the SCR catalyst 51. In the exhaust gas purification apparatus according to the third embodiment, an NOx removing catalyst such as an NSR catalyst for reducing NOx in the exhaust gas is not provided in the exhaust passage 5 upstream of the SCR catalyst 51. The components and the control processing in the third embodiment that are substantially the same as those in the above-described embodiments will not be described further.

In the exhaust gas purification apparatus according to the above-descried embodiments, the NOx concentration in the exhaust gas flowing into the SCR catalyst 51 is low, because a large part of NOx discharged from the internal combustion engine 1 is stored, adsorbed, or reduced by the NSR catalyst 50. In the exhaust gas purification apparatus according to the third embodiment also, in which an NOx removing catalyst such as an NSR catalyst is not provided upstream of the SCR catalyst 51, the NOx concentration in the exhaust gas flowing into the SCR catalyst 51 can be low in some cases depending on the operation state of the internal combustion engine 1 or other factors. In such cases, by performing supply control in the process of abnormality diagnosis, abnormality diagnosis of the SCR catalyst 51 can be performed based on the ammonia concentration in the region downstream of the SCR catalyst 51. In the exhaust gas purification apparatus according to the third embodiment, executing the control flow shown in Fig. 6 referred to above by the ECU 10 enables the abnormality diagnosis of the SCR catalyst 51 to be performed at an adequate frequency.

### Fourth Embodiment

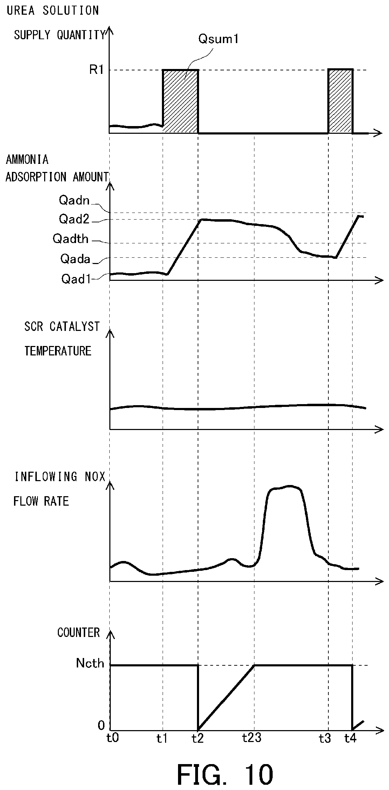

A fourth embodiment of the present invention will be described with reference to Fig. 10. In the above-described embodiments, the catalyst temperature raising control is performed as the reducing control. In the fourth embodiment, NOx flowing rate increasing control for increasing the flow rate of NOx flowing into the SCR catalyst 51 is performed as the reducing control. The components and the control processing in the fourth embodiment that are substantially the same as those in the above-described embodiments will not be described further.

The NOx flow rate increasing control will be described with reference to Fig. 10. Fig. 10 is a graph showing change with time of the quantity of urea solution supplied by the urea solution addition valve 52 per unit time, the ammonia adsorption amount, the SCR catalyst temperature, the inflowing NOx flow rate, and the counter when the supply control and the reducing control (i.e. the NOx flow rate increasing control) are performed by the ECU 10. In the control shown in Fig. 10, the supply control is started at time t1 at which the condition for performing the latest abnormality diagnosis is met and ended at time t2. Moreover, the supply control is started at time t3 at which the condition for performing the next abnormality diagnosis is met and ended at time t4.

As shown in Fig. 10, at time t2 at which the supply control is ended, the counter is initialized to zero. The ammonia adsorption amount Qad2 at time t2 is larger than the specific upper limit adsorption amount Qadth. After the completion of the supply control, the state in which ammonia adsorption amount is larger than the specific upper limit adsorption amount Qadth is maintained, and the counter continues to increase during that period. At time t23 at which the value of the counter reaches a predetermined value Ncth, the NOx flow rate increasing control is performed as the reducing control. Time t23 is a specific time after the completion of the latest abnormality diagnosis and before the start of the next abnormality diagnosis.

After the NOx flow rate increasing control is started at time t23, the inflowing NOx flow rate increases. As the inflowing rate increases, a relatively large quantity of ammonia is consumed to reduce NOx flowing into the SCR catalyst 51. Therefore, when the NOx flow rate increasing control is performed, the ammonia adsorption amount decreases as shown in Fig. 10.

When the NOx flow rate increasing control is performed in place of the catalyst temperature raising control in the embodiment of the first aspect of the present invention (i.e. the first embodiment), the increase in the quantity of NOx and the length of time over which the NOx flow rate increasing control is performed may be varied depending on the target decrease Qred. When the NOx flow rate increasing control is performed in place of the catalyst temperature raising control in the embodiment of the second aspect of the present invention (i.e. the second embodiment), the increase in the quantity of NOx and the length of time over which the NOx flow rate increasing control is performed may be determined in advance.

Now, a method of increasing the flow rate of NOx flowing into the SCR catalyst 51 in the exhaust gas purification apparatus having the NSR catalyst 50 arranged upstream of the SCR catalyst 51 will be described. As described above, the NSR catalyst 50 chemically stores or physically adsorbs NOx in the exhaust gas when the air-fuel ratio of the exhaust gas is a lean air-fuel ratio higher than the stoichiometric air-fuel ratio. The efficiency of such storage and adsorption tends to decrease with increasing amount of NOx chemically stored or physically adsorbed in the NSR catalyst 50. The amount of NOx chemically stored or physically adsorbed in the NOx catalyst will also be referred to as the "NOx storage amount" hereinafter. During normal operation of the internal combustion engine 1, NOx chemically stored or physically adsorbed in the NSR catalyst 50 (which will also be referred to as the "stored NOx") is reduced by releasing the stored NOx and promoting the reaction of the released NOx and reductive components in the exhaust gas, before the efficiency of storage and adsorption (which will be also referred to as the "NOx storage efficiency) of NOx in the NSR catalyst 50 becomes low.

When the NOx flow rate increasing control is performed, the NOx storage efficiency is reduced by not performing the above-described reduction of NOx to let the NOx storage amount increase. In consequence, the flow rate of NOx that pass through the NSR catalyst 50 without being stored or adsorbed in the NSR catalyst 50 increases, leading to an increase in the flow rate of NOx flowing into the SCR catalyst 51.

When the NOx flow rate increasing control is performed, the quantity of EGR into the cylinder 2 of the internal combustion engine 1 is decreased. As the quantity of EGR into the cylinder 2 decreases, the combustion temperature tends to rise, leading to an increase in the quantity of NOx discharged from the internal combustion engine 1. As the quantity of NOx discharged from the internal combustion engine 1 increases, the flow rate of NOx flowing into the NSR catalyst 50 increases. Therefore, the NOx storage amount can be increased as quickly as possible. When the NOx storage amount is large and the NOx storage efficiency is low, increases in the flow rate of the NOx flowing into the NSR catalyst 50 lead to increases in the flow rate of NOx that passes through the NSR catalyst 50 without being stored or adsorbed in the NSR catalyst 50, and hence increases in the flow rate of NOx flowing into the SCR catalyst 51.

The above-described NOx flow rate increasing control should be performed when the SCR catalyst temperature falls within its active temperature range so that emissions will not be increased by this control. The method of increasing the flow rate of NOx flowing into the SCR catalyst 51 is not limited to the method described above, but other known methods may be employed.

The abnormality diagnosis system for the exhaust gas purification apparatus according to the present invention enables the abnormality diagnosis of the SCR catalyst 51 to be performed at an adequate frequency by performing the NOx flow rate increasing control as the reducing control in the control flow shown in Fig. 6.

### Third Embodiment

In the system according to the third embodiment, the ECU 10 estimates "an ammonia adsorption amount in abnormal condition" and "an ammonia adsorption amount in normal condition" in the SCR catalyst 51. The ammonia adsorption amount in abnormal condition is the amount of ammonia adsorbed in the SCR catalyst 51 under the assumption that the SCR catalyst is in a condition that is diagnosed as abnormal by the abnormality diagnosis. The ammonia adsorption amount in normal condition is the amount of ammonia adsorbed in the SCR catalyst 51 under the assumption that the SCR catalyst is in a normal condition.

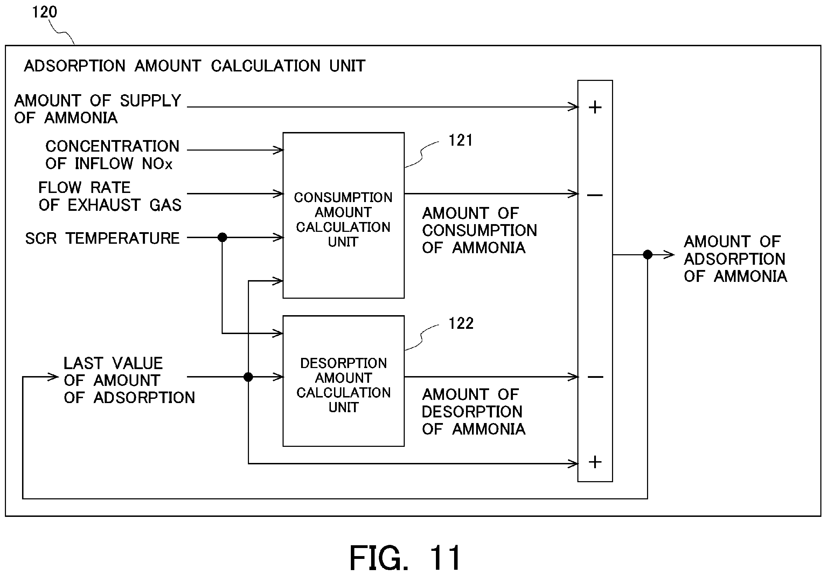

The ECU 10 calculates the ammonia adsorption amount in abnormal condition and the ammonia adsorption amount in normal condition repeatedly at predetermined calculation intervals. A specific method of calculating the ammonia adsorption amount in the SCR catalyst 51 according to this embodiment will now be described with reference to Fig. 11. Fig. 11 is a block diagram illustrating functions of an adsorption amount calculation unit in the ECU 10. The adsorption amount calculation unit 120 is a functional unit that is implemented by executing a certain program in the ECU 10 to calculate the amount of ammonia adsorbed in the SCR catalyst 51.

The adsorption amount calculation unit 120 calculates the present ammonia adsorption amount by integrating the amount of ammonia supplied to the SCR catalyst 51 (ammonia supply amount), the amount of ammonia consumed in reduction of NOx in the SCR catalyst 51 (ammonia consumption amount), and the amount of ammonia desorbed from the SCR catalyst 51 (ammonia desorption amount). Specifically, the adsorption amount calculation unit 120 includes a consumption amount calculation unit 121 and a desorption amount calculation unit 122. The consumption amount calculation unit 121 calculates an ammonia consumption amount as the amount of ammonia consumed in reduction of NOx in the SCR catalyst 51 through a specific period corresponding to the interval of calculation of the ammonia adsorption amount. The desorption amount calculation unit 122 calculates an ammonia desorption amount as the amount of ammonia desorbed from the SCR catalyst during the specific period. Moreover, the adsorption amount calculation unit 120 estimates an ammonia supply amount as the amount of ammonia supplied to the SCR catalyst 51 during the specific period. As described above, the ammonia supplied to the SCR catalyst 51 is produced by hydrolysis of urea contained in urea solution added through the urea solution addition valve 52. Therefore, the ammonia supply amount can be estimated on the basis of the amount of urea solution added through the urea solution addition valve 52 during the specific period.

To the consumption amount calculation unit 121 are input the values of the NOx concentration in the exhaust gas flowing into the SCR catalyst 51 (inflowing NOx concentration), the exhaust gas flow rate, the temperature of the SCR catalyst (SCR catalyst temperature), and the ammonia adsorption amount in the SCR catalyst 51 calculated in the previous (i.e. the last) calculation (previous adsorption amount). The inflowing NOx concentration is measured by the second NOx sensor 54. The NOx removal rate with the SCR catalyst 51 relates to the exhaust gas flow rate, the SCR catalyst temperature, and the ammonia adsorption amount in the SCR catalyst 51. The consumption amount calculation unit 121 calculates the NOx removal rate that the SCR catalyst 51 is supposed to provide at the present time (which will be hereinafter referred to as the "estimated NOx removal rate") from the values of the exhaust gas flow rate, the SCR catalyst temperature, and the previous adsorption amount input thereto. Moreover, the consumption amount calculation unit 121 calculates the amount of NOx flowing into the SCR catalyst 51 during the specific period (which will be hereinafter referred to as the "inflowing NOx amount") from the values of the inflowing NOx concentration and the exhaust gas flow rate input thereto. Then, the consumption amount calculation unit 121 calculates the ammonia consumption amount from the estimated NOx removal rate and the inflowing NOx amount calculated as above. To the desorption amount calculation unit 122 are input the values of the SCR catalyst temperature and the previous adsorption amount. The desorption amount calculation unit 122 calculates the ammonia desorption amount from the values of the SCR catalyst temperature and the previous adsorption amount.

When the adsorption amount calculation unit 120 calculates the ammonia adsorption amount in abnormal condition, the consumption amount calculation unit 121 and the desorption amount calculation unit 122 calculate the ammonia consumption amount and the ammonia desorption amount respectively on the assumption that the SCR catalyst 51 is in a condition that is diagnosed as abnormal by abnormality diagnosis. When the adsorption amount calculation unit 120 calculates the ammonia adsorption amount in normal condition, the consumption amount calculation unit 121 and the desorption amount calculation unit 122 calculate the ammonia consumption amount and the ammonia desorption amount respectively on the assumption that the SCR catalyst 51 is in a normal condition. The ammonia adsorption amount in abnormal condition is calculated by integrating the ammonia consumption amount and the ammonia desorption amount calculated on the assumption that the SCR catalyst 51 is in a condition that is diagnosed as abnormal by abnormality diagnosis and the ammonia supply amount. The ammonia adsorption amount in normal condition is calculated by integrating the ammonia consumption amount and the ammonia desorption amount calculated on the assumption that the SCR catalyst 51 is in a normal condition and the ammonia supply amount.

The method of estimating the ammonia adsorption amount in abnormal condition and the ammonia adsorption amount in normal condition is not limited to the above-described method. Other known methods of estimation may be employed instead. In the third embodiment, the ECU 10 corresponds to the first estimation unit according to the third aspect of the present invention in estimating the ammonia adsorption amount in abnormal condition and to the second estimation unit according to the third aspect of the present invention in estimating the ammonia adsorption amount in normal condition.

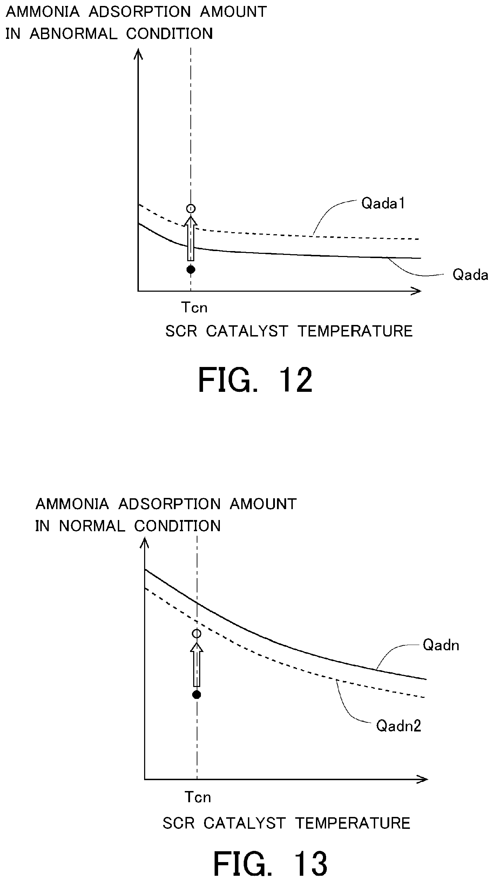

In the third embodiment, when abnormality diagnosis of the SCR catalyst 51 is to be performed, supply control for diagnosis is performed. In the supply control for diagnosis, urea solution is supplied through the urea solution addition valve 52 in such a way as to make the ammonia adsorption amount in abnormal condition estimated by the ECU 10 larger than a first predetermined adsorption amount, which is equal to or larger than the slip start adsorption amount in abnormal condition, and to make the ammonia adsorption amount in normal condition estimated by the ECU 10 smaller than a second predetermined adsorption amount, which is equal to or smaller than the slip start adsorption amount in normal condition. Changes in the ammonia adsorption amount in abnormal condition and the ammonia adsorption amount in normal condition with the execution of the supply control for diagnosis will be described in the following with reference to Figs. 12 and 13.

Fig. 12 is a graph illustrating relationship of the slip start adsorption amount in abnormal condition Qada and the first predetermined adsorption amount Qada1 with the temperature of the SCR catalyst 51 (SCR catalyst temperature). In Fig. 12, the solid curve represents the slip start adsorption amount in abnormal condition Qada, and the broken curve represents the first predetermined adsorption amount Qada1. In the case illustrated in Fig. 12, the first predetermined adsorption amount Qada1 is set equal to the slip start adsorption amount in abnormal condition Qada plus a certain margin. Alternatively, the first predetermined adsorption amount Qada1 may be set equal to the slip start adsorption amount in abnormal condition Qada. Fig. 13 is a graph illustrating relationship of the slip start adsorption amount in normal condition Qadn and the second predetermined adsorption amount Qadn2 with the temperature of the SCR catalyst 51 (SCR catalyst temperature). In the case illustrated in Fig. 13, the second predetermined adsorption amount Qadn2 is set equal to the slip start adsorption amount in normal condition Qadn minus a certain margin. Alternatively, the second predetermined adsorption amount Qadn2 may be set equal to the slip start adsorption amount in normal condition Qadn.

In Figs. 12 and 13, solid circles (or black dots) represent the ammonia adsorption amount in abnormal condition and the ammonia adsorption amount in normal condition at the same time (namely, at the same SCR catalyst temperature Tcn) before the supply control for diagnosis is performed. As indicated by the solid circle in Fig. 12, the ammonia adsorption amount in abnormal condition is smaller than the slip start adsorption amount in abnormal condition Qada before the start of the supply control for diagnosis is performed. As indicated by the solid circle in Fig. 13, the ammonia adsorption amount in normal condition is smaller than the second predetermined adsorption amount Qadn2 before the start of the supply control for diagnosis is performed. When the ammonia adsorption amount in abnormal condition is smaller than the slip start adsorption amount in abnormal condition Qada as in the case illustrated in Fig. 12, ammonia hardly slips out of the SCR catalyst 51 even if the SCR catalyst 51 has an abnormality. In such circumstances, it is difficult to perform abnormality diagnosis of the SCR catalyst 51 accurately on the basis of the ammonia concentration in the region downstream of the SCR catalyst 51. When abnormality diagnosis of the SCR catalyst 51 is to be performed in such circumstances, the system according to this embodiment performs the supply control for diagnosis to supply ammonia to the SCR catalyst 51.

When ammonia is supplied to the SCR catalyst 51 by the supply control for diagnosis, the ammonia adsorption amount in abnormal condition and the ammonia adsorption amount in normal condition both increase as indicated by arrows in Figs. 12 and 13. In Figs. 12 and 13, hollow circles represent the ammonia adsorption amount in abnormal condition and the ammonia adsorption amount in normal condition after the supply control for diagnosis is performed. As indicated by the hollow circle in Fig. 12, the ammonia adsorption amount in abnormal condition is larger than the first predetermined adsorption amount Qada1 after the supply control for diagnosis is performed. On the other hand, as indicated by the hollow circle in Fig. 13, the ammonia adsorption amount in normal condition is smaller than the second predetermined adsorption amount Qadn2 even after the supply control for diagnosis is performed.

When the ammonia adsorption amount in abnormal condition becomes larger than the first predetermined adsorption amount Qada1 with the supply of ammonia to the SCR catalyst 51 as illustrated in Fig. 12, ammonia will slip out of the SCR catalyst 51, if the SCR catalyst 51 has an abnormality. If the ammonia adsorption amount in normal condition is larger than the slip start adsorption amount in normal condition Qadn at the same time, ammonia will slip out of the SCR catalyst 51, even if the SCR catalyst 51 is in a normal condition. In such circumstances also, it is difficult to perform abnormality diagnosis of the SCR catalyst 51 accurately on the basis of the ammonia concentration in the region downstream of the SCR catalyst 51. To solve this problem, the supply control for diagnosis is designed to control the quantity of ammonia supplied to the SCR catalyst 51 in such a way as to make the ammonia adsorption amount in abnormal condition larger than the first predetermined adsorption amount Qada1 and to make the ammonia adsorption amount in normal condition smaller than the second predetermined adsorption amount Qadn2 after the execution of the supply control for diagnosis, as illustrated in Figs. 12 and 13. When the supply control for diagnosis is performed in this way, an appropriate quantity of ammonia is supplied to the SCR catalyst 51 so that ammonia will slip out of the SCR catalyst 51 if the SCR catalyst 51 is in an abnormal condition but will not slip out of the SCR catalyst 51 if the SCR catalyst 51 is in a normal condition. This enables abnormality diagnosis of the SCR catalyst 51 based on the ammonia concentration in the region downstream of the SCR catalyst 51 to be performed accurately.

As above, when performing abnormality diagnosis of the SCR catalyst 51, the system according to this embodiment performs the supply control for diagnosis to adjust the ammonia adsorption amount in the SCR catalyst 51 to an amount suitable for abnormality diagnosis of the SCR catalyst 51 based on ammonia slipping out of the SCR catalyst 51. This enables abnormality diagnosis of the SCR catalyst 51 to be performed at an adequate frequency.

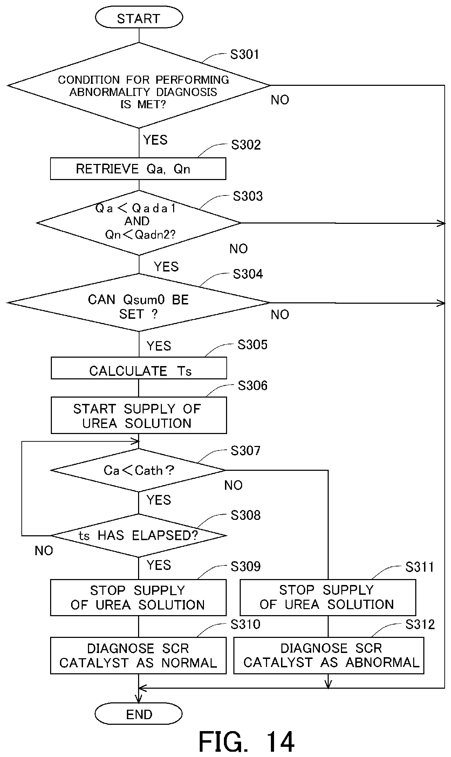

A control process for abnormality diagnosis of the SCR catalyst 51 executed by the ECU 10 according to the embodiment will be described with reference to Fig. 14. Fig. 14 is a flow chart of the control process according to this embodiment. In this embodiment, the ECU 10 executes this process repeatedly at predetermined calculation intervals while the internal combustion engine 1 is operating. In this embodiment, while the internal combustion engine 1 is operating, the ECU 10 executes another process other than this process to estimate the ammonia adsorption amount in abnormal condition and the ammonia adsorption amount in normal condition repeatedly at predetermined calculation intervals as described above.

In the process illustrated in Fig. 14, firstly in step S301, it is determined whether or not a condition for performing abnormality diagnosis of the SCR catalyst 51 is met. The condition for performing abnormality diagnosis of the SCR catalyst 51 may be, for example, that warming-up of the SCR catalyst 51 has been finished after the start of the internal combustion engine 1 and the internal combustion engine 1 is in a stationary operation state. The condition for performing abnormality diagnosis of the SCR catalyst 51 may include the condition that the vehicle provided with the internal combustion engine 1 has traveled a predetermined distance after the end of the latest abnormality diagnosis of the SCR catalyst 51 or the condition that the internal combustion engine 1 has operated for a predetermined length of time after the end of the latest abnormality diagnosis of the SCR catalyst 51. These conditions are merely examples, and the determination in step S301 as to whether the condition for performing abnormality diagnosis of the SCR catalyst 51 is met may be made using known technologies. If a negative determination is made in step S301, the execution of this process is terminated this time. If an affirmative determination is made in step S301, the processing of step S302 is executed next.

In step S302, the values of the ammonia adsorption amount in abnormal condition Qa and the ammonia adsorption amount in normal condition Qn at the present time are retrieved, which are estimated by a process other than this process. Then, in step S303, it is determined whether or not the ammonia adsorption amount in abnormal condition Qa at the present time retrieved in step S302 is smaller than the first predetermined adsorption amount Qada1 and the ammonia adsorption amount in normal condition Qn at the present time retrieved in step S302 is smaller than the second predetermined adsorption amount Qadn2. The first predetermined adsorption amount Qada1 and the second predetermined adsorption amount Qadn2 referred to in step S303 are values that are determined on the basis of the temperature of the SCR catalyst 51 at the present time. The ECU 10 has relationship between the temperature of the SCR catalyst 51 and the first predetermined adsorption amount Qada1 like that illustrated in Fig. 12 and relationship between the temperature of the SCR catalyst 51 and the second predetermined adsorption amount Qadn2 like that illustrated in Fig. 13 as maps or functions stored in its ROM. The ECU 10 determines the first predetermined adsorption amount Qada1 and the second predetermined adsorption amount Qadn2 in step S303 using these maps or functions. If a negative determination is made in step S303, the execution of this process is terminated this time. If an affirmative determination is made in step S303, the processing of step S304 is executed next.

In step S304, it is determined whether or not it is possible to set a supply quantity for diagnosis QsumO, which is defined as the quantity of urea solution to be supplied through the urea solution addition valve 52 in the supply control for diagnosis. The supply quantity for diagnosis Qsum0 is such a quantity that makes the ammonia adsorption amount in abnormal condition Qa larger than the first predetermined adsorption amount Qada1 and keeps the ammonia adsorption amount in normal condition Qn smaller than the second predetermined adsorption amount Qadn2 when this quantity of urea solution is added through the urea solution addition valve 51. In step S303, the ammonia adsorption amount in abnormal condition Qa and the ammonia adsorption amount in normal condition Qn after the execution of the supply control for diagnosis are estimated from the ammonia adsorption amount in abnormal condition Qa and the ammonia adsorption amount in normal condition Qn at the present time retrieved in step S302 and respective increases thereof resulting from the additional supply of urea solution through the urea solution addition valve 52. Specifically, the ECU 10 estimates the ammonia adsorption amount in abnormal condition Qa and the ammonia adsorption amount in normal condition Qn after the execution of the supply control for diagnosis, if executed, by the aforementioned adsorption amount calculation unit 120. Then, it is determined whether or not it is possible to set the supply quantity for diagnosis Qsum0 described above on the basis of the estimated values of the ammonia adsorption amount in abnormal condition Qa and the ammonia adsorption amount in normal condition Qn. If a negative determination is made in step S304, the execution of this flow is terminated this time. In other words, abnormality diagnosis of the SCR catalyst 51 based on the ammonia concentration in the region downstream of the SCR catalyst 51 is enabled by performing the supply control for diagnosis according to this embodiment only when affirmative determinations are made in steps S303 and S304 before the supply control for diagnosis is performed.

If an affirmative determination is made in step S304, it may be concluded that it is possible to perform the supply control for diagnosis. Then, in step S305, a urea solution supply time ts is calculated on the basis of the supply quantity for diagnosis QsumO, which can be set according to the determination in step S304. The urea solution supply time ts is a length of time over which urea solution is to be supplied through the urea solution addition valve 52 by the supply control for diagnosis. In other words, the urea solution supply time ts calculated in step S305 is the length of time taken to supply urea solution through the urea solution addition valve 52 in the supply quantity for diagnosis Qsum0.

Then, in step S306, supply of urea solution through the urea solution addition valve 52 is started. Thus, the supply control for diagnosis is started. Then, in step S307, it is determined whether or not the concentration Ca measured by the third NOx sensor 55 is lower than a threshold concentration Cath. The processing executed in step S307 is the same as that in step S109 in the process illustrated in Fig. 6. If an affirmative determination is made in step S307, the processing of step S308 is executed next. If a negative determination is made in step S307, the execution of the processing of step S311 is executed next.

In step S308, it is determined whether or not the urea solution supply time ts calculated in step S305 has elapsed after the start of supply of urea solution through the urea solution addition valve 52 in step S306. If a negative determination is made in step S308, the processing of step S307 is executed again. If an affirmative determination is made in step S308, then in step S309 the supply of urea solution through the urea solution addition valve 52 is stopped. Thus, the supply control for diagnosis is ended. In this case, slip of ammonia out of the SCR catalyst 51 is not occurring even after urea solution has supplied through the urea solution addition valve 52 in the supply quantity for diagnosis Qsum0, in other words, even though the ammonia adsorption amount in abnormal condition Qa has exceeded the first predetermined adsorption amount Qada1. In consequence, it is determined then in step S310 that the SCR catalyst 52 is normal.

If a negative determination is made in step S307, the processing of step S311 is executed next. In step S311 also, the supply of urea solution through the urea solution addition valve 52 is stopped. In this case, slip of ammonia out of the SCR catalyst 51 has occurred while the supply of urea solution through the urea solution addition valve 52 up to the supply quantity for diagnosis Qsum0 is performed, in other words, while the ammonia adsorption amount in normal condition Qn is smaller than the second predetermined adsorption amount Qadn2. In consequence, it is determined then in step S312 that the SCR catalyst 52 has an abnormality.

In the above process, a determination as to whether or not the concentration Ca measured by the third NOx sensor is smaller than the threshold concentration Cath may be made as in step S307 at the time when the urea solution supply time ts has elapsed from the start of the supply of urea solution through the urea solution addition valve 52. In this case also, if the concentration Ca measured by the third NOx sensor 55 is smaller than the threshold concentration Cath, the SCR catalyst 51 may be determined to be normal. If the concentration Ca measured by the third NOx sensor 55 is not smaller than the threshold concentration Cath, the SCR catalyst 51 may be determined to have an abnormality.

In the above-described process, when the condition for performing abnormality diagnosis of the SCR catalyst 51 is met, if affirmative determinations are made in steps S303 and S304, it is possible to perform abnormality diagnosis of the SCR catalyst 51 by performing the supply control for diagnosis. This enables abnormality diagnosis of the SCR catalyst 51 to be performed at an adequate frequency.

### Reference Signs List

- 1:: internal combustion engine
- 3:: fuel injection valve
- 4:: intake passage
- 5:: exhaust passage
- 10:: ECU
- 40:: air flow meter
- 50:: NSR catalyst
- 51:: SCR catalyst
- 52:: urea solution addition valve
- 53:: first NOx sensor
- 54:: second NOx sensor
- 55:: third NOx sensor
- 56:: temperature sensor

## Claims

1. An abnormality diagnosis system for an exhaust gas purification apparatus that is applied to an exhaust gas purification apparatus including a reducing agent supply device provided in an exhaust passage of an internal combustion engine to supply ammonia or a precursor of ammonia as a reducing agent into the exhaust passage, a selective catalytic reduction NOx catalyst provided in the exhaust passage downstream of said reducing agent supply device to reduce NOx in exhaust gas by ammonia, and measuring means configured to measure the ammonia concentration in the exhaust gas downstream of said selective catalytic reduction NOx catalyst and performs abnormality diagnosis of said selective catalytic reduction NOx catalyst on the basis of the ammonia concentration measured by said measuring means, comprising:
estimation means configured to estimate an ammonia adsorption amount defined as the amount of ammonia adsorbed in said selective catalytic reduction NOx catalyst on the assumption that said selective catalytic reduction NOx catalyst is normal;
supply control means configured to perform supply control to supply, by said reducing agent supply device, said reducing agent in a predetermined fixed supply quantity for diagnosis larger than the quantity of reducing agent that is supplied by said reducing agent supply device for the purpose of reduction of NOx by said selective catalytic reduction NOx catalyst, when said abnormality diagnosis is performed;
abnormality diagnosis means configured to perform abnormality diagnosis of said selective catalytic reduction NOx catalyst on the basis of the ammonia concentration measured by said measuring means when said reducing agent is supplied by said supply control; and
reducing control means configured to perform reducing control to reduce the amount of ammonia adsorbed in said selective catalytic reduction NOx catalyst in such a way as to make said ammonia adsorption amount after the completion of said supply control performed next time larger than a slip start adsorption amount in abnormal condition defined as the amount of ammonia adsorbed in said selective catalytic reduction NOx catalyst at which slip of ammonia out of said selective catalytic reduction NOx catalyst starts if said selective catalytic reduction NOx catalyst is in a condition in which said selective catalytic reduction NOx catalyst is diagnosed to have an abnormality by said abnormality diagnosis and smaller than a slip start adsorption amount in normal condition defined as the amount of ammonia adsorbed in said selective catalytic reduction NOx catalyst at which slip of ammonia out of said selective catalytic reduction NOx catalyst starts if said selective catalytic reduction NOx catalyst is in a normal condition, at a specific time after the completion of said abnormality diagnosis performed last time and before the start of said abnormality diagnosis performed next time, if said ammonia adsorption amount is larger than a specific upper limit adsorption amount at said specific time.

2. An abnormality diagnosis system for an exhaust gas purification apparatus that is applied to an exhaust gas purification apparatus including a reducing agent supply device provided in an exhaust passage of an internal combustion engine to supply ammonia or a precursor of ammonia as a reducing agent into the exhaust passage, a selective catalytic reduction NOx catalyst provided in the exhaust passage downstream of said reducing agent supply device to reduce NOx in exhaust gas by ammonia, and measuring means configured to measure the ammonia concentration in the exhaust gas downstream of said selective catalytic reduction NOx catalyst and performs abnormality diagnosis of said selective catalytic reduction NOx catalyst on the basis of the ammonia concentration measured by said measuring means, comprising:
estimation means configured to estimate an ammonia adsorption amount defined as the amount of ammonia adsorbed in said selective catalytic reduction NOx catalyst on the assumption that said selective catalytic reduction NOx catalyst is normal;
supply control means configured to perform supply control to supply, by said reducing agent supply device, said reducing agent in a supply quantity for diagnosis larger than the quantity of reducing agent that is supplied by said reducing agent supply device for the purpose of reduction of NOx by said selective catalytic reduction NOx catalyst, when said abnormality diagnosis is performed, said supply control means performing said supply control in such a way as to make said ammonia adsorption amount after the completion of said supply control larger than a slip start adsorption amount in abnormal condition defined as the amount of ammonia adsorbed in said selective catalytic reduction NOx catalyst at which slip of ammonia out of said selective catalytic reduction NOx catalyst starts if said selective catalytic reduction NOx catalyst is in a condition in which said selective catalytic reduction NOx catalyst is diagnosed to have an abnormality by said abnormality diagnosis and smaller than a slip start adsorption amount in normal condition defined as the amount of ammonia adsorbed in said selective catalytic reduction NOx catalyst at which slip of ammonia out of said selective catalytic reduction NOx catalyst starts if said selective catalytic reduction NOx catalyst is in a normal condition;
abnormality diagnosis means configured to perform abnormality diagnosis of said selective catalytic reduction NOx catalyst on the basis of the ammonia concentration measured by said measuring means when said reducing agent is supplied by said supply control; and
reducing control means configured to perform reducing control to reduce the amount of ammonia adsorbed in said selective catalytic reduction NOx catalyst in such a way as to make said ammonia adsorption amount equal to or smaller than a specific upper limit adsorption amount, at a specific time after the completion of said abnormality diagnosis performed last time and before the start of said abnormality diagnosis performed next time, if said ammonia adsorption amount is larger than said specific upper limit adsorption amount at said specific time.

3. An abnormality diagnosis system for an exhaust gas purification apparatus according to claim 2, further comprising determination means configured to determine, when a condition for performing said abnormality diagnosis is met, said supply quantity for diagnosis on the basis of said ammonia adsorption amount at the time when said condition for performing said abnormality diagnosis is met in such a way that the sum of said ammonia adsorption amount at the time when said condition for performing said abnormality diagnosis is met and the quantity of ammonia derived from said supply quantity for diagnosis is larger than said slip start adsorption amount in abnormal condition and smaller than said slip start adsorption amount in normal condition, wherein said supply control means supplies said reducing agent in said supply quantity for diagnosis determined by said determination means by said reducing agent supply device in said supply control.

4. An abnormality diagnosis system for an exhaust gas purification apparatus according to claim 3, wherein said determination means determines said supply quantity for diagnosis in such a way that the sum of said ammonia adsorption amount at the time when said condition for performing said abnormality diagnosis is met and the quantity of ammonia derived from said supply quantity for diagnosis is equal to or larger than an abnormality diagnosis enabling quantity defined as the sum of said slip start adsorption amount in abnormal condition and a specific measurable ammonia quantity and smaller than said slip start adsorption amount in normal condition.

5. An abnormality diagnosis system for an exhaust gas purification apparatus according to any one of claims 1 to 4, wherein said exhaust gas purification apparatus further comprises an NOx removing catalyst provided in the exhaust passage upstream of said selective catalytic reduction NOx catalyst to reduce NOx in the exhaust gas.

6. An abnormality diagnosis system for an exhaust gas purification apparatus according to any one of claims 1 to 5, wherein said reducing control means performs, as said reducing control, at least one of catalyst temperature raising control for raising the temperature of said selective catalytic reduction NOx catalyst and NOx flow rate increasing control for increasing the flow rate of NOx flowing into said selective catalytic reduction NOx catalyst.

7. An abnormality diagnosis system for an exhaust gas purification apparatus that is applied to an exhaust gas purification apparatus including a reducing agent supply device provided in an exhaust passage of an internal combustion engine to supply ammonia or a precursor of ammonia as a reducing agent into the exhaust passage, a selective catalytic reduction NOx catalyst provided in the exhaust passage downstream of the reducing agent supply device to reduce NOx in exhaust gas by ammonia, and a measuring unit configured to measure the ammonia concentration in the exhaust gas downstream of the selective catalytic reduction NOx catalyst and performs abnormality diagnosis of the selective catalytic reduction NOx catalyst on the basis of the ammonia concentration measured by the measuring unit, comprising:
a first estimation unit configured to estimate an ammonia adsorption amount in abnormal condition defined as the amount of ammonia adsorbed in the selective catalytic reduction NOx catalyst on the assumption that the selective catalytic reduction NOx catalyst is in a condition that is diagnosed as abnormal by the abnormality diagnosis;
a second estimation unit configured to estimate an ammonia adsorption amount in normal condition defined as the amount of ammonia adsorbed in the selective catalytic reduction NOx catalyst on the assumption that the selective catalytic reduction NOx catalyst is in a normal condition;
a supply control unit configured to perform, when the abnormality diagnosis is to be performed, supply control for diagnosis to supply the reducing agent by the reducing agent supply device in such a way as to make the ammonia adsorption amount in abnormal condition estimated by the first estimation unit larger than a first predetermined adsorption amount that is equal to or larger than a slip start adsorption amount in abnormal condition and to make the ammonia adsorption amount in normal condition estimated by the second estimation unit smaller than a second predetermined adsorption amount that is equal to or smaller than a slip start adsorption amount in normal condition, the slip start adsorption amount in abnormal condition being defined as the amount of ammonia adsorbed in the selective catalytic reduction NOx catalyst at which slip of ammonia out of the selective catalytic reduction NOx catalyst starts if the selective catalytic reduction NOx catalyst is in a condition that is diagnosed as abnormal by the abnormality diagnosis, and the slip start adsorption amount in normal condition being defined as the amount of ammonia adsorbed in the selective catalytic reduction NOx catalyst at which slip of ammonia out of the selective catalytic reduction NOx catalyst starts if the selective catalytic reduction NOx catalyst is in a normal condition; and
an abnormality diagnosis unit configured to perform abnormality diagnosis of the selective catalytic reduction NOx catalyst on the basis of the ammonia concentration measured by the measuring unit while the supply control for diagnosis is performed by the supply control unit.
